# EUROPÄISCHE PATENTSCHRIFT

(11) **EP 3 661 802 B1**
(45) Veröffentlichungstag und Bekanntmachung des Hinweises auf die Patenterteilung: **20.11.2024**
(21) Anmeldenummer: 18755729.3
(22) Anmeldetag: 01.08.2018
(51) Int. Cl.: B60M 1/18, H01H 1/20, H01H 3/30, H01H 1/36, H01H 1/42, H01H 33/10

(54) **RESTLAST-TRENNSCHALTER**
RESIDUAL LOAD ISOLATING SWITCH
DISJONCTEUR À CHARGE RÉSIDUELLE

(30) Priorität: 01.08.2017 DE 202017104597 U
(43) Veröffentlichungstag der Anmeldung: 10.06.2020
(60) Teilanmeldung: 23156335.4
(73) Patentinhaber: Walter Kraus GmbH, 86167 Augsburg (DE)
(72) Erfinder: BÜLTER, Olaf, 86551 Sulzbach (DE)
(74) Vertreter: ERNICKE Patent- und Rechtsanwälte PartmbB
(86) Internationale Anmeldenummer: PCT/EP2018/070880
(87) Internationale Veröffentlichungsnummer: WO 2019/025493

(56) Entgegenhaltungen:
- EP-A1- 2 718 949
- EP-B1- 2 050 111
- CH-A- 514 226
- DE-A1- 3 428 519
- US-A1- 2016 099 120

## Beschreibung

Die Erfindung betrifft eine Restlast-Trenntechnik zur Trennung einer elektrischen Verbindung unter einem Reststrom bzw. einer Restlast an einer Einspeisestelle zu einem Fahrstrom Versorgungsleiter, insbesondere einen Restlast-Trennschalter und dessen Bestandteile sowie ein Betriebsverfahren für einen Restlast-Trennschalter. Die Erfindung betrifft ferner eine Sicherheitstechnik zur sicheren Betätigung und Überwachung eines Restlast-Trennschalters.

Zum Verständnis der vorliegenden Offenbarung und des relevanten technischen Gebiets sind einige Definitionen und Hinweise zum Einsatz von Trennschaltern zu berücksichtigen, die nachfolgend zusammengefasst sind.

Ein Trennschalter (auch als Trenner bezeichnet, bzw. Englisch: disconnector) ist von einem normalen Schalter oder Lastschalter (Englisch: Switch) zu unterscheiden. (Reine) Trennschalter dienen dazu, Stromkreise in einem stromlosen Zustand zu trennen oder zu verbinden. Wenn ein Trennschalter im Geschlossen-Zustand ist, werden hohe Ströme von 1.000 Ampere oder mehr durch den Trennschalter geführt. Es handelt sich hinsichtlich der im Geschlossen-Zustand hindurchführbaren Ströme also um ein Hochlast-Bauteil, hinsichtlich der trennbaren Last aber um ein Niedriglast-Bauteil.

Das Öffnen eines Trennschalters unter Anliegen der Hauptlast ist nicht vorgesehen und führt in der Regel zur Beschädigung oder Zerstörung des Trennschalters oder zu sonstigen negativen Auswirkungen, die grundsätzlich vermieden werden sollen, wie bspw. zur Bildung eines unzulässig starken Lichtbogens, der Brände oder Verletzungen hervorrufen kann. Ein Trennschalter hat somit eine andere Aufgabe und Ausbildung als beispielsweise ein Schütz (Englisch: Contactor) oder eine Sicherung (Englisch: Fuse).

Aus CH 514 226 A ist ein unter Last trennender Hochspannungs-Drehschalter bekannt. Dieser umfasst einen elektrisch leitenden Drehteil, der direkt auf einer Schalterantriebswelle aufgekeilt ist. Der Schrift ist nicht zu entnehmen, für welche Stromstärke der Schalter vorgesehen ist. Ein weiterer Lastschalter ist aus DE 3428519 A1 bekannt. Dieser umfasst einen elektrisch leitfähigen Rotor, der an seinen Enden separate Kontaktstücke aus unterschiedlichen Materialien trägt. Der Rotor ist direkt auf eine Schaltachse aufgesetzt.

EP 2718949 A1 offenbart einen Lastschalter mit einem Schaltkörper, der zwischen einer geöffneten Stellung und einer geschlossenen Stellung hin und her gedreht wird. Der Schaltkörper umfasst gerade Kontakte, die durch eine aus Isoliermaterial geformte Walze hindurchgesteckt sind. Ein weiterer Lastschalter mit einem entsprechenden Aufbau und einer Hin- und Herbewegung zwischen einer geschlossenen und geöffneten Stellung ist aus US 2016/099120 A1 bekannt. EP 2 050 111 B1 offenbart einen Antrieb für einen Schalter.

Ein Restlast-Trennschalter stellt eine besondere Variante eines Trennschalters dar. Er kann (wie der reine Trennschalter) im stromlosen Zustand geöffnet oder geschlossen werden. Zusätzlich kann der Restlast-Trennschalter unter Anliegen einer definierten Restlast geöffnet (und etwaig geschlossen) werden, wobei die Restlast aber viel geringer ist als die Hauptlast, die im geschlossenen Zustand über den Restlast-Trennschalter geführt wird.

Der Restlast-Trennschalter gemäß der vorliegenden Offenbarung dient dazu, einen Fahrstrom-Versorgungsleiter für ein elektrisch betriebenes Verkehrsmittel von einer Restlast - die nach der Abschaltung einer Hauptlast vorliegen kann - so zu trennen, dass ein Reststrom nicht mehr von der Zuführleitung zu dem Fahrstrom-Versorgungsleiter fließen kann. Der Restlast-Trennschalter ist also dafür vorgesehen und ausgebildet, eine elektrische Verbindung zu einem Fahrstrom-Versorgungsleiter eines Verkehrsmittels zu trennen und zwar im stromlosen Zustand oder wenn maximal eine vordefinierte Restlast anliegt. Im Geschlossen-Zustand leitet der Restlast-Trennschalter die Hauptlast, d.h. den Fahrstrom für das Verkehrsmittel zu dem Fahrstrom-Versorgungsleiter durch. Im Offen-Zustand verhindert der Restlast-Trennschalter, dass ein Strom und insbesondere die Hauptlast auf den Fahrstrom-Versorgungsleiter übertragen wird. Der Restlast-Trennschalter gemäß der vorliegenden Offenbarung kann somit auch als Verkehrsmittel-Restlast- Trennschalter bezeichnet werden.

Die Zuführleitung ist in der Regel über einen weiteren Hauptlast-Trennschalter mit einer Spannungsquelle verbunden. Während eines Fahrbetriebs können Hauptlast-Ströme auftreten, die beispielsweise bis zu 4000 Ampere, 6000 Ampere oder darüber betragen. Der Restlast-Trennschalter überträgt in der geschlossenen Stellung diesen Hauptlast-Strom von der Zuführleitung auf den Fahrstrom-Versorgungsleiter. Der Hauptlast-Trennschalter, der nicht Gegenstand der vorliegenden Offenbarung ist, ist dazu ausgebildet, die elektrische Verbindung zwischen der Spannungsquelle und der Zuführleitung auch unter Anliegen der maximalen Hauptlast zu trennen.

Wenn der Hauptlast-Trennschalter geöffnet ist, liegt die Hauptlast nicht mehr an dem Restlast-Trennschalter bzw. dem Fahrstrom-Versorgungsleiter an. Eine Restkapazität in der Zuführleitung kann jedoch dazu führen, dass trotz der Öffnung des Hauptlast-Trennschalters noch ein erheblicher Reststrom über die Einspeisestelle in den Fahrstrom-Versorgungsleiter fließt, der eine Lebensgefahr für einen Werker begründen kann, der den Fahrtstrom-Versorgungsleiter berührt. Um Instandhaltungsmaßnahmen an dem Fahrstrom-Versorgungsleiter durchführen zu können, muss dieser auch von der Restlast sicher getrennt werden.

Die Restlast bzw. der Reststrom kann in einem festgelegten Bereich auftreten, insbesondere in einem Bereich bis 50 Ampere und bei Spannungen bis 900V oder darüber. Die Restlast beträgt bevorzugt maximal 5 Prozent der Hauptlast, insbesondere weniger als 3 Prozent der Hauptlast. Der Restlast-Trennschalter ist dazu ausgebildet, die elektrische Verbindung an der Einspeisestelle zu der Stromschiene unter Anliegen des maximal zulässigen Reststroms bzw. der maximal zulässigen Restlast zu trennen.

Mit anderen Worten ist der Restlast-Trennschalter dazu ausgebildet, in der Geschlossen-Stellung einen HauptlastStrom zu übertragen und nach einer Abschaltung der Hauptlast unter Anliegen einer Restlast in eine ÖffnungsStellung versetzt zu werden, um die elektrische Verbindung an der Einspeisestelle zu einem Fahrstrom-Versorgungsleiter vollständig zu trennen.

Der Restlast-Trennschalter muss nicht dazu ausgebildet sein, die elektrische Verbindung an der Einspeisestelle zu einem Fahrstrom-Versorgungsleiter unter Anliegen der Hauptlast zu trennen. Vielmehr sind gemäß der vorliegenden Offenbarung Maßnahmen vorgeschlagen, die ein Öffnen des Restlast-Trennschalters unter Anliegen der Hauptlast wirksam vermeiden.

Bisher bekannte Restlast-Trennschalter werden zur Versorgung von Stromschienen für Gleisfahrzeuge eingesetzt und haben keine optimale Ausbildung. Sie bestehen in der Regel aus einem einseitig gelagerten und elektrisch leitenden Handhebel, der zwischen einer Geschlossen-Stellung und einer Offen-Stellung durch manuellen Eingriff bewegbar ist. In der Geschlossen-Stellung verbindet der Handhebel einen Einspeisekontakt mit einem Gleisversorgungskontakt. Der Handhebel ist in der Regel ca. einen Meter lang oder noch größer und in einem Schutzkasten an einer Gleisstrecke angeordnet. Wegen des großen Raumbedarfs der bisher bekannten Restlast-Trennschalter werden diese alternativ in einem Schaltschrank untergebracht, der in der Nähe der Gleisstrecke aufgebaut und über separate Anschlusskabel mit einer Stromschiene verbunden ist. Die Betätigung des Handhebels ist bei den bekannten Restlast-Trennschaltern nur mit erheblichem Kraftaufwand möglich und bedingt ein Stromschlagrisiko für den Werker. Es kann außerdem zu schweren Unfällen kommen, wenn in einem Schaltschrank, der mehrere Restlast-Trennschalter zu verschiedenen Stromschienen bzw. Gleisabschnitten umfasst, versehentlich ein falscher Trennschalter geöffnet wird und ein Werker eine Stromschiene berührt, deren zugeordneter Restlast-Trennschalter noch unter der Restlast steht.

Aus DE 1 203 343 A ist ein Trennschalter bekannt, der zur Trennung einer elektrischen Verbindung zu einer Stromschiene einer elektrischen Bahn ausgebildet ist. Dieser Trennschalter weist zwei Drehköpfe auf, an denen jeweils separate und einseitig nach außen überstehende Kontaktmesser angeordnet sind. Zum Öffnen oder Schließen der elektrischen Verbindung werden beide Drehknöpfe synchronisiert in eine Drehbewegung versetzt. Es ist eine Drehung in beiden Richtungen möglich, d.h. einerseits eine Drehung im Uhrzeigersinn zum Öffnen der elektrischen Verbindung und andererseits eine Drehung im Gegenuhrzeigersinn zum Schließen der elektrischen Verbindung. Die erreichbaren Drehpositionen der Drehköpfe sind durch ein Getriebe vorgegeben.

Aus WO 2013/186433 A1 ist ein Lastschalter (Englisch Switch) mit einem Schwenk-Kontaktkörper bekannt, der dauerhaft an seinem einen Ende mit einem ersten stationären Kontakt in Verbindung steht. Am Verbindungspunkt zwischen dem Schwenk-Kontaktkörper und dem ersten stationären Kontakt ist die Schwenkachse gebildet. Das freie Ende des Schwenk-Kontaktkörpers kann durch eine Schwenkbewegung im Uhrzeigersinn in Kontakt mit einem zweiten stationären Kontakt gebracht werden. Eine gegenläufige Schwenkbewegung, d.h. im Gegenuhrzeigersinn, trennt den Kontakt zwischen dem Schwenk-Kontaktkörper und dem zweiten stationären Kontakt. Für das Öffnen und Schließen eines elektrischen Kontakts ist also eine Hin- und Herbewegung des Schwenk-Kontaktkörpers vorgesehen. Die maximal erreichbaren Schwenkpositionen sind durch Anschlagflächen an einem Gehäuse des Schwenk-Kontaktkörpers festgelegt.

WO 2013/153279 A1, EP 2 936 525 B1 und US 2013/0153538 A1 offenbaren verschiedene Lastschalter und Sicherungen, die jeweils einen Schaltkörper aufweisen, der um eine Mittelachse schwenkbar ist. Die offenbarten Schaltkörper sind jeweils in beiden Richtungen drehbar, jedoch ist der maximale Schwenkbereich jeweils durch Anschläge beidseitig limitiert. Die schwenkbaren Schaltkörper sind also jeweils in einer ersten Richtung schwenkbar, um eine elektrische Verbindung zu schließen, und in einer gegenläufigen Richtung schwenkbar, um die elektrische Verbindung wieder zu lösen. Für das Öffnen und Schließen eines elektrischen Kontakts ist also jeweils eine Hinund Herbewegung des schwenkbaren Schaltkörpers vorgesehen.

Es ist Aufgabe der vorliegenden Erfindung, einen verbesserten Restlast-Trennschalter aufzuzeigen. Die Erfindung löst diese Aufgabe durch die kennzeichnenden Merkmale des eigenständigen Anspruchs.

Der Restlast-Trennschalter gemäß der vorliegenden Offenbarung weist eine besonders kompakte Bauform, ein sicheres Schaltverhalten, ggfs. eine Fernsteuerungsund/oder Fernüberwachungs-Möglichkeit und eine verbesserte Montierbarkeit auf. Er kann als vollständige, vormontierte Baugruppe mitsamt einer Schutzeinhausung direkt an einem Fahrstrom-Versorgungsleiter montiert werden, sodass es keines separaten Schaltschrankes und keines separaten Fundaments bedarf.

Der Restlast-Trennschalter gemäß der vorliegenden Offenbarung wird nachfolgend erläutert. Er ist dazu ausgebildet und vorgesehen, eine elektrische Verbindung zu einem Fahrstrom-Versorgungsleiter zu trennen. Er weist mindestens einen Zuleitungs-Anschluss, mindestens einen Ableitungs-Anschluss und mindestens eine Schaltvorrichtung auf. Zuleitungs-Anschluss und Ableitungs-Anschluss können Bestandteile einer Schaltvorrichtung sein.

Der Zuleitungs-Anschluss ist bevorzugt über eine Zuführleitung mit einem (entfernten) Hauptlast-Trennschalter und einer (entfernten) Spannungsquelle verbunden. Der Ableitungs-Anschluss ist bevorzugt über einen (nahen) Schienenanschluss oder einen (nahen) Oberleitungsanschluss mit einer Stromschiene oder einer Oberleitung für ein elektrisch betriebenes Verkehrsmittel wie beispielsweise einen Zug, eine S-Bahn oder einen Oberleitungsbus verbunden. Allgemein ausgedrückt ist der Ableitungs-Anschluss bevorzugt mit einem Anschluss zu einem Fahrstrom-Versorgungsleiter verbindbar oder verbunden. Der Fahrstrom-Versorgungsleiter ist dazu vorgesehen und ausgebildet, den Fahrstrom für ein Verkehrsmittel, insbesondere eine S-Bahn, einen Zug, eine Straßenbahn oder einen Oberleitungsbus zu übertragen. Entsprechend ist der Restlast-Trennschalter dazu ausgebildet, im Geschlossen-Zustand diesen Fahrtstrom als Hauptlast zwischen dem Zuleitungs-Anschluss und dem Ableitungs-Anschluss zu übertragen.

Die Schaltvorrichtung weist mindestens einen Rotationsschaltkörper mit mindestens einem Kontaktschwert auf. Das mindestens eine Kontaktschwert ist um eine Achse drehbar angeordnet, die sich zwischen dem Zuleitungs-Anschluss und dem Ableitungs-Anschluss erstreckt. Das mindestens eine Kontaktschwert weist endseitig in Radialrichtung überstehende Kontaktflächen auf. Bevorzugt sind jeweils zwei Kontaktschwerter zu einem vorgespannten Paar zusammengefasst. Die Kontaktflächen an den Kontaktschwertern sind durch eine Rotationsbewegung mit sowohl einer Kontaktzunge an einem Zuleitungs-Anschluss als auch mit einer Kontaktzunge an einem Ableitungs-Anschluss in berührenden Kontakt bringbar sowie durch eine weitere Rotationsbewegung außer Kontakt bringbar.

Die Kontaktflächen stehen in einer Geschlossen-Drehstellung des Rotationsschaltkörpers also einerseits mit dem Zuleitungs-Anschluss und andererseits mit dem Ableitungs-Anschluss in berührendem Kontakt. In einer Offen-Drehstellung des Rotationskörpers sind die Kontaktflächen jeweils zu dem Zuleitungs-Anschluss und dem Ableitungs-Anschluss beabstandet.

Der Restlast-Trennschalter gemäß der vorliegenden Offenbarung weist eine einseitig beschränkte Drehrichtung zur Ausführung der Schaltbewegungen auf. Er wird stets in derselben Drehrichtung iterativ von einer Geschlossen-Drehstellung in eine Offen-Drehstellung und wieder in eine Geschlossen-Drehstellung usw. bewegt. Der Restlast-Trennschalter ist somit unidirektional und zyklisch betätigbar. Es ist nicht erforderlich, eine sonst übliche Hin- und Herbewegung auszuführen oder den Rotationsschaltkörper mit einer reversierenden Bewegung anzutreiben, um von einer Offen-Drehstellung in eine Geschlossen-Drehstellung und zurück in eine Offen-Drehstellung überzugehen.

Der Rotationsschaltkörper kann also stets bzw. ausschließlich in einer ersten Drehrichtung - bspw. im Uhrzeigersinn - bewegt werden, um einen Übergang zwischen zwei Schaltpositionen auszuführen. Eine gegenläufige Bewegung - gemäß dem Beispiel im Gegenuhrzeigersinn - ist gesperrt.

Mit anderen Worten werden (alle) Übergänge zwischen zwei Schaltpositionen an dem Restlast-Trennschalter gemäß der vorliegenden Offenbarung in derselben Drehrichtung ausgeführt, angetrieben oder ausgelöst. Die Drehpositionen, die zu Beginn und zum Ende einer Schaltbewegung eingenommen werden, können allerdings fest vorgegeben sein, insbesondere zu solchen Positionen, an denen die Kontaktflächen eines Kontaktschwerts in einer Vorzugs-Lage am Zuleitungs-Anschluss und/oder am Ableitungs-Anschluss positioniert sind.

Durch die einseitige Beschränkung der Drehrichtung bzw. durch die unidirektionale drehende Betätigung wird es möglich, den Restlast-Trennschalter mit einem besonders einfachen Antrieb, erfindungsgemäß einem rotatorischen Sprungantrieb zu betreiben. Der Antrieb kann eine unidirektionale Beweglichkeit aufweisen. Auf die sonst bei Trennschaltern übliche Hin- und Herbewegung des Schaltkörpers und eine entsprechend notwendige Reversierbarkeit des Antriebs kann verzichtet werden. Vielmehr ist es möglich, mit nur einem Antrieb, erfindungsgemäß mit einem Sprungantrieb, beide Schaltbewegungen, d.h. von einer Geschlossen-Stellung in eine Offen-Stellung sowie von einer Offen-Stellung in eine Geschlossen-Stellung, iterativ auszuführen.

Der Rotationsschaltkörper kann bevorzugt rotationssymmetrisch zur Drehachse ausgebildet sein und die Drehachse ist bevorzugt mittig zwischen dem Zuleitungs-Anschluss und dem Ableitungs-Anschluss angeordnet. Eine Geschlossen-Drehstellung ist bevorzugt orthogonal zu einer Offen-Drehstellung ausgerichtet. Alternativ sind andere Ausrichtungen zwischen einer Geschlossen-Drehstellung und einer Offen-Drehstellung möglich. Die Offen-Drehstellung(en) und die Geschlossen-Drehstellung(en) sind bevorzugt zu einheitlichen Versatzwinkeln um die Mittelachse angerordnet, insbesondere jeweils um 90 Winkelgrad versetzt oder um 45 Winkelgrad versetzt.

Der Rotationsschaltkörper kann durch beliebige technische Mittel dazu veranlasst werden, aus der Geschlossen-Drehstellung in die Offen-Drehstellung überzugehen, erfindungsgemäß durch einen sogenannten Sprung-Antrieb, der eine beliebige Ausbildung haben kann. Der Sprung-Antrieb ist bevorzugt als rotatorischer Antrieb ausgebildet, der insbesondere eine iterative Antriebsbewegung in stets derselben Drehrichtung ausführt, nämlich in genau derjenigen Drehrichtung, in der sich der Rotationsschaltkörper des Restlast-Trennschalters bewegen kann.

Der Restlast-Trennschalter mit dem vorgenannten Rotationsschaltkörper eignet sich besonders gut zu einer schnellen und sicheren Trennung der elektrischen Verbindung zwischen dem Zuleitungs-Anschluss und dem Ableitungs-Anschluss, wobei die Aktivierung sowohl manuell als auch gesteuert bzw. motorisch angetrieben erfolgen kann.

Beim Übergang von der Geschlossen-Drehstellung in die Offen-Drehstellung werden einerseits eine elektrische Verbindung zwischen dem Zuleitungs-Anschluss und mindestens einer ersten Kontaktfläche an dem mindestens einen Kontaktschwert und andererseits eine elektrische Verbindung zwischen dem Ableitungs-Anschluss und mindestens einer weiteren Kontaktfläche an dem mindestens einen Kontaktschwert simultan getrennt. Auf diese Weise verteilt sich eine zu schaltende Last im Wesentlichen zu gleichen Anteilen auf je eine erste Trennstelle am Zuleitungs-Anschluss und eine zweite Trennstelle am Ableitungs-Anschluss. Diese erste und zweite Trennstelle sind über dem Kontaktschwert in Reihe geschaltet. Die Schaltleistung wird jeweils für den Zuleitungs-Anschluss und den Ableitungs-Anschluss vermindert, so dass die Kontaktpartner einer geringeren Belastung ausgesetzt sind. Dementsprechend können für die vorgenannten Bauteile geringere Dimensionierungen gewählt werden als bei bisher bekannten Restlast-Trennschaltern einer entsprechenden Leistungsklasse. Der Restlast-Trennschalter gemäß der vorliegenden Offenbarung ist daher besonders kompakt und weist ein vergleichsweise geringes Gewicht auf.

Weiterhin kann ein Rotationsschaltkörper mehrere Kontaktschwerter und insbesondere mehrere Paare von Kontaktschwertern auf, die gemeinsam und simultan angetrieben sind sowie elektrisch parallel geschaltet sind. Somit verteilt sich die Schaltleistung auch über mehrere Kontaktzonen an dem mindestens einen Zuleitungs-Anschluss, die gemeinsame die erste Trennstelle bilden, sowie mehrere Kontaktzonen an dem Ableitungs-Anschluss, die die zweite Trennstelle bilden. Auch diese Parallelschaltung von mehreren Kontaktzonen reduziert die anteilige Schaltleistung, was zu einer weiteren Reduzierung der Beanspruchung und/oder geringeren möglichen Abmaßen der Schaltvorrichtung bzw. des Restlast-Trennschalters führt.

Gemäß einer besonders bevorzugten Ausführungsform weist der Restlast-Trennschalter ringförmig angeordnete Löschkammern auf. Die Löschkammern können insbesondere auf der im Wesentlichen kreisförmigen Bewegungsbahn angeordnet sein, welche die Kontaktflächen an dem mindestens einem Kontaktschwert durchlaufen, wenn der Restlast-Trennschalter von der Geschlossen-Drehstellung in die Offen-Drehstellung versetzt wird. Besonders bevorzugt ist je eine Löschkammer in der Drehbewegungsrichtung hinter dem Zuleitungs-Anschluss und hinter dem Ableitungs-Anschluss angeordnet.

Die Löschkammern können eine beliebige Ausbildung haben. Sie dienen bevorzugt dazu, einen Lichtbogen zu löschen, der beim Trennen der elektrischen Verbindung auftreten kann. Eine Löschkammer kann bevorzugt eine Mehrzahl von Kontaktschwertern, insbesondere zwei oder mehr Paare von Schaltschwertern in der Axialrichtung bzw. einer Radialebene zur Drehachse des Rotationsschaltkörpers übergreifen. Hierdurch wird ein besonders wirksamer und zugleich kompakter Aufbau der Löschkammer erreicht.

Ein Betriebsverfahren gemäß der vorliegenden Offenbarung ist zum Betrieb eines Restlast-Trennschalters vorgesehen, der einen rotatorischen Sprungantrieb (40) aufweist, der den Rotationsschaltkörper (23) des Restlast-Trennschalters (1) zu einer sprungartigen Schaltdrehung veranlassen kann. Der Restlast-Trennschalter weist ferner eine Lasterkennung auf, die einen Stromfluss und/oder eine Spannung zwischen dem Zuleitungs-Anschluss und dem Ableitungs-Anschluss des Restlast-Trennschalters überwacht. Das Betriebsverfahren kann insbesondere in Verbindung mit dem beanspruchen Restlast-Trennschalter verwendet werden. Es umfasst zumindest die folgenden Schritte.

Eine Anforderung zur Trennung der elektrischen Verbindung am Restlast-Trennschalter wird empfangen. Die Last, die an dem Restlast-Trennschalter zwischen dem Zuleitungs-Anschluss (20) und dem Ableitungs-Anschluss (21) anliegt, wird überprüft, insbesondere nach dem Erhalt der Anforderung. Eine sprunghafte Drehbewegung des RotationsSchaltkörpers wird ausgelöst, wenn festgestellt wird, dass die Last, die die an dem Restlast-Trennschalter zwischen dem Zuleitungs-Anschluss (20) und dem Ableitungs-Anschluss (21) anliegt, kleiner (oder gleich) ist als die zulässige Restlast.

Durch das Betriebsverfahren wird eine in verschiedener Hinsicht verbesserte Fernsteuerbarkeit erreicht. Einerseits wird durch die Lasterkennung und die davon abhängige Auslösung der Drehbewegung erreicht, dass der Trennschalter nur betätigt wird, wenn das Restlast-Kriterium erfüllt ist. Eine versehentliche Betätigung des Restlast-Trennschalters unter Anliegen der Hauptlast oder bei Überschreitung der zulässigen Restlast kann verhindert werden. Hierdurch wird ein sicherer Betrieb des Restlast-Trennschalters gewährleistet.

Durch die Verwendung eines rotatorischen Sprungantriebs kann sowohl das Öffnen, als auch das Schließen der elektrischen Verbindung mit nur einem Antrieb und insbesondere per Fernsteuerung erfolgen. Somit wird ein vollständig ferngesteuerter Betrieb ermöglicht. Manuelle Zugriffe auf den Restlast-Trennschalter sind zwar möglich, aber nicht erforderlich.

Der Restlast-Trennschalter umfasst bevorzugt ein Lagefeststellungsmittel, das dazu ausgebildet ist, die Drehlage des Rotationsschaltkörpers und/oder die momentane Schaltposition des Restlast-Trennschalters zu erfassen, insbesondere das Vorliegen einer Geschlossen-Drehstellung oder einer Offen-Drehstellung. Die erfasste Drehlage oder Schaltposition kann als Statusbenachrichtigung über eine Kommunikationsschnittstelle des Restlast-Trennschalters versendet werden. Auf diese Weise wird nicht nur eine Fernsteuerung sondern zusätzlich eine Fernüberwachung des Restlast-Trennschalters ermöglicht.

In den Unteransprüchen sind weitere bevorzugte Ausführungsvarianten der vorliegenden Erfindung offenbart.

Die Erfindung ist in den Figuren beispielhaft und schematisch dargestellt. Es zeigen:
- Figur 1:: eine Schrägbilddarstellung eines Restlast-Trennschalters in einer ersten Ausführungsvariante;
- Figur 2:: eine schematische Darstellung der Stromversorgung für ein elektrisches Verkehrsmittel mit einem Fahrstrom-Versorgungsleiter;
- Figuren 3 bis 5:: Schnittdarstellungen des Restlast-Trennschalters aus Figur 1;
- Figur 6:: eine Detaildarstellung einer Schaltvorrichtung mit einem Rotationsschaltkörper;
- Figur 7:: eine Seitenansicht auf einen Rotationsschaltkörper;
- Figuren 8 und 9:: Schnittdarstellungen des Rotationsschaltkörpers gemäß Schnittlinie VIII-VIII aus Figur 7 in einer Gesamtansicht und einer Vergrößerungsansicht;
- Figuren 10 und 11:: einen Restlast-Trennschalter gemäß einer zweiten bevorzugten Ausführungsvariante in einer Außenansicht und einer teilweise geschnittenen Ansicht;
- Figur 12:: einen horizontalen Halbschnitt durch den Restlast-Trennschalters aus Figuren 10 und 11;
- Figuren 13 u 14:: Eine weitere Ausführung eines Restlast-Trennschalters mit einem abgewandelten Gehäuse und einer Gewichtsausgleich-Halterung.

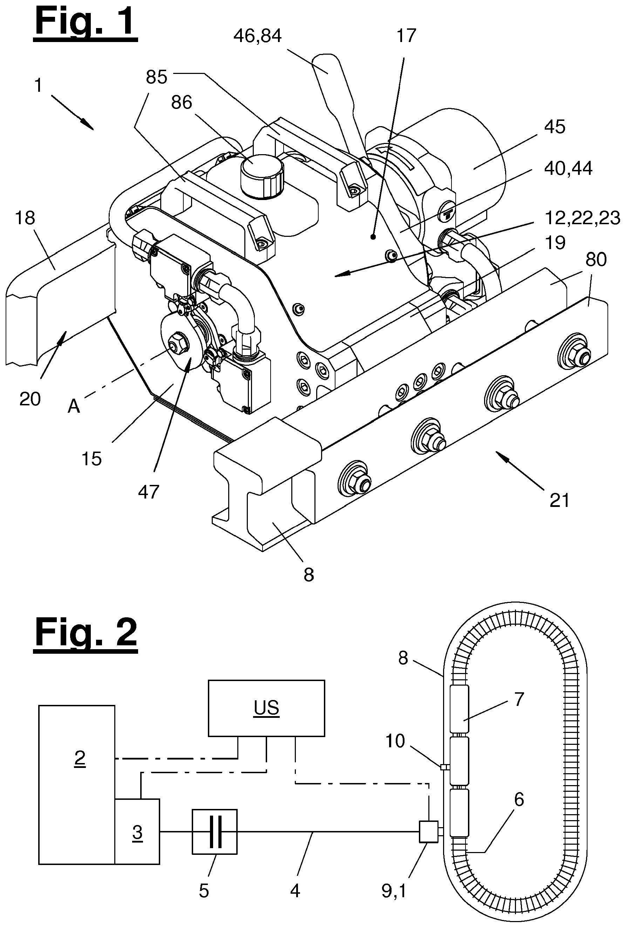

Der Restlast-Trennschalter (1) gemäß der vorliegenden Offenbarung ist in Figuren 1, 10, 11 und 13 in zwei bevorzugten Ausführungsvarianten gezeigt. Er umfasst zumindest eine Schaltvorrichtung (22) sowie erfindungsgemäß einen Sprungantrieb (40) und etwaig einen Antriebsmotor (45). Die Schaltvorrichtung (22) kann bevorzugt mehrfach vorhanden sein, insbesondere als ein erster Modul-Schaltblock (19) und ein zweiter Modul-Schaltblock (13). Alternativ können drei oder mehr Modul-Schaltblöcke von derselben oder einer anderen Bauart vorhanden sein.

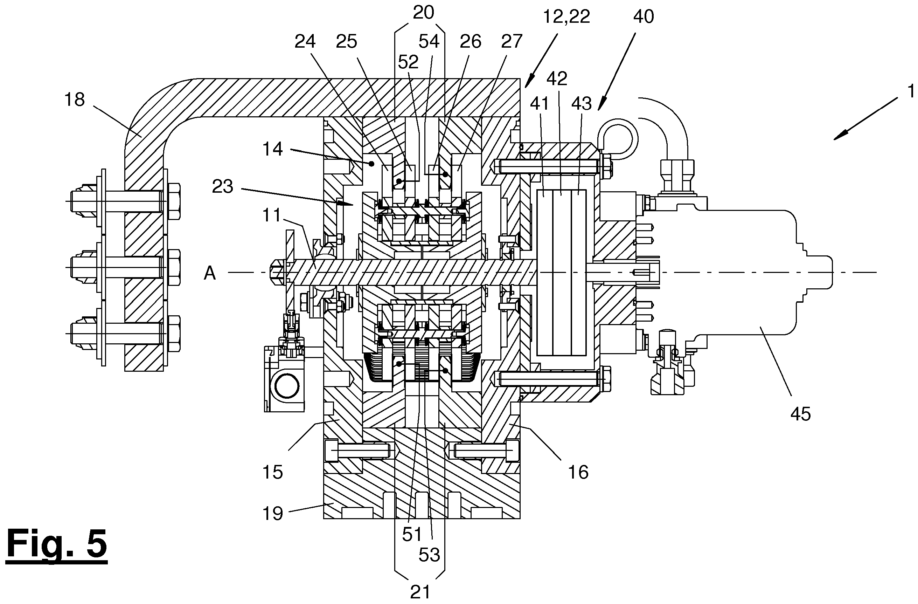

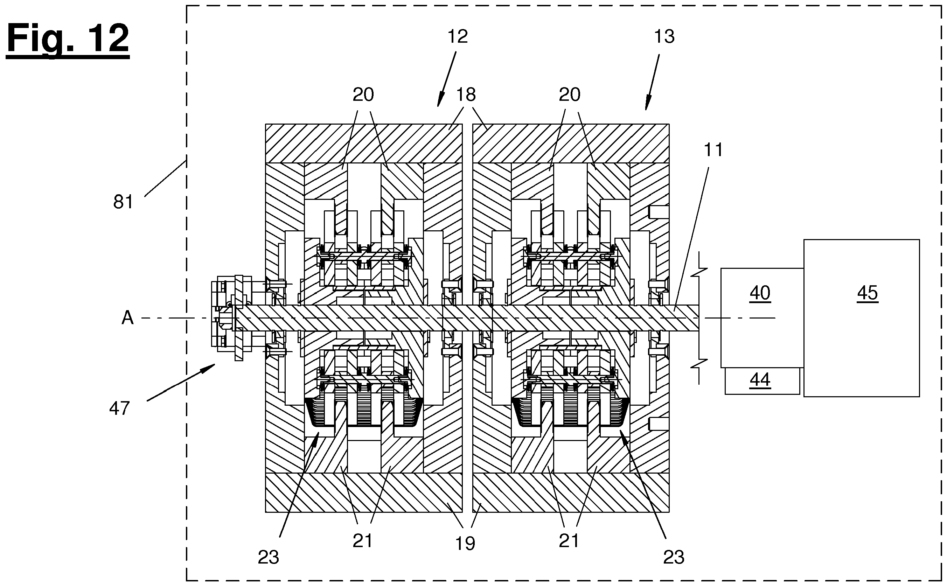

Die Schaltvorrichtung (22) weist eine Isolatorkammer (14) auf, in der ein Rotationsschaltkörper (23) sowie mindestens ein Zuleitungs-Anschluss (20) und mindestens ein Ableitungs-Anschluss (21) angeordnet sind. Die Isolatorkammer (14) kann eine beliebige Ausbildung haben. In den gezeigten Beispielen ist die Isolatorkammer (14) durch eine erste und eine zweite Seitenwand (15, 16) gebildet (vgl. Figuren 5 und 12) sowie durch eine oder mehrere Abdeckungen (17). Die Isolatorkammer ist im Wesentlichen gegen das Eindringen von Staub und Feuchtigkeit abgedichtet. Sie weist bspw. an der Unterseite eine Labyrinth-Dichtung (nicht dargestellt) und an der Oberseite eine Entlüftung (86) auf.

Der mindestens eine Zuleitungs-Anschluss (20) und der mindestens eine Ableitungs-Anschluss (21) durchdringen bevorzugt eine Wandung der Isolatorkammer (14), sodass einerseits eine Einspeiseschiene (18) und andererseits ein Ausspeisekollektor (19) elektrisch leitend mit dem mindestens einen Zuleitungs-Anschluss (20) und dem mindestens einen Ableitungs-Anschluss (21) verbindbar sind. Die Einspeiseschiene (18) und/oder der Ausspeisekollektor (19) können Bestandteile des Restlast-Trennschalters (1) sein. Alternativ können sie separat vorliegen.

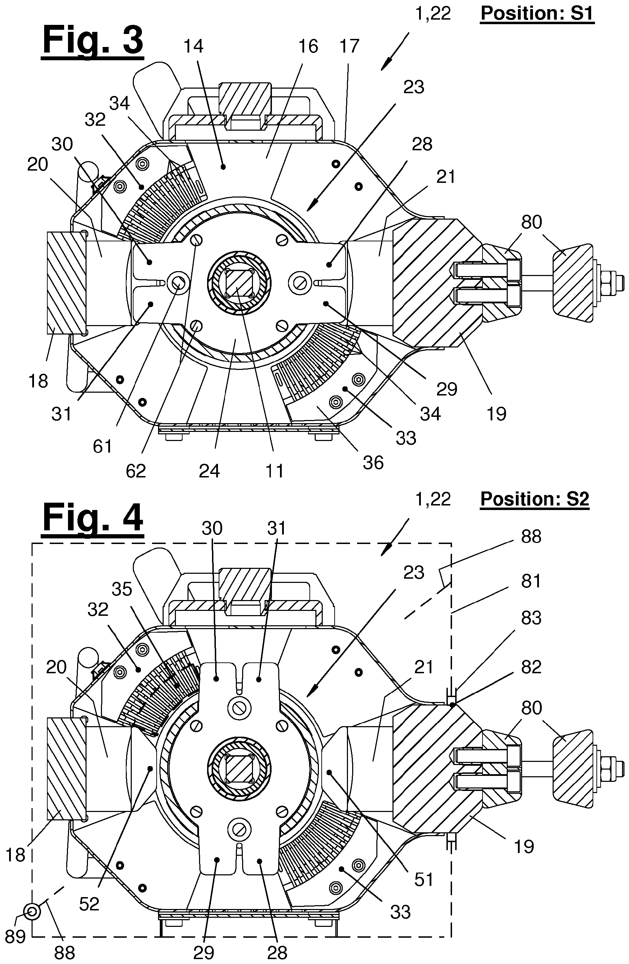

Figuren 3 und 4 illustrieren den Übergang des Rotationsschaltkörpers (23) aus einer Geschlossen-Drehstellung (S1) in eine Offen-Drehstellung (S2) in einer Schnittdarstellung. Sie verdeutlichen ferner eine bevorzugte Ausbildung und Anordnung von Löschkammern (32, 33) .

Die Löschkammern (32, 33) können bevorzugt eine übereinstimmende Ausbildung haben. Alternativ können sie jeweils unterschiedlich ausgebildet sein.

Gemäß der Darstellung in Figuren 3 und 4 kann eine Löschkammer (32, 33) die äußere Form eines Kreisring-Segments aufweisen. Jedes der Kreisring-Segmente ist entlang der Bewegungsbahn der Kontaktflächen (28, 29, 30, 31) an dem mindestens einen Kontaktschwert (24, 25, 26, 27) angeordnet, die beim Übergang von der Geschlossen-Drehstellung (S1) in die Offen-Drehstellung (S2) durchlaufen wird. Im Beispiel von Figur 3 deckt jedes der Kreissegmente einen Drehwinkel von ca. 50° ab. Alternativ kann ein anderer Segmentwinkel abgedeckt werden, insbesondere ein Winkel im Bereich von 30° bis 90°.

Die Offen-Drehstellung (S2) ist bevorzugt in einem 90° Winkel zur Geschlossen-Drehstellung (S1) vorgesehen und festgelegt. Auf diese Weise werden maximale lichte Abstände zwischen den Kontaktflächen (28, 29, 30, 31) an dem mindestens einen Kontaktschwert (24, 25, 26, 27) zu jeweils dem mindestens einen Zuleitungs-Anschluss (20) und dem mindestens einen Ableitungs-Anschluss (21) erreicht. Die Dimensionierung der Kontaktschwerter (24, 25, 26, 27) und Kontaktflächen (28, 29, 30, 31) kann derart vorgenommen werden, dass die lichte Weite größer ist als der Mindestabstand, der für die Durchschlagsicherheit erforderlich ist.

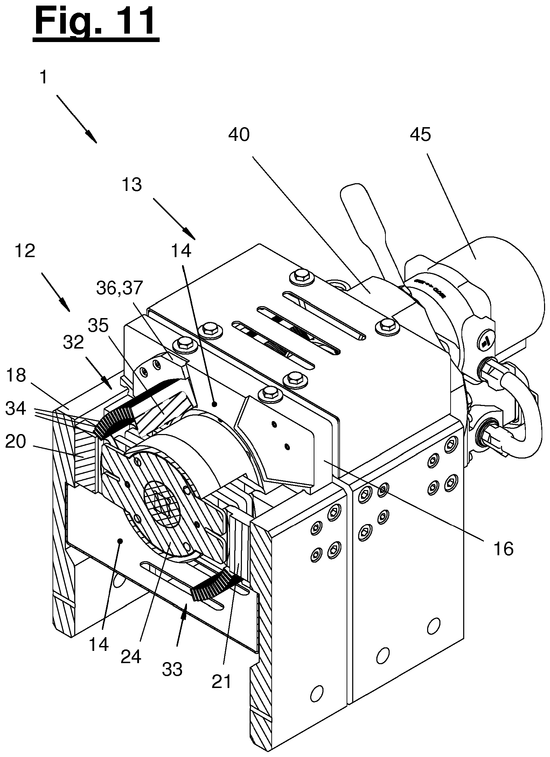

Figur 11 enthält eine perspektivische Ansicht einer Löschkammer (32) mit einer bevorzugten Ausbildung. Die Löschkammer (32) ist durch einen Löschkäfig gebildet, dessen Lage insbesondere gegenüber dem Rotationsschaltkörper (23) positionierbar ist. Die Positionierung kann insbesondere durch eine Positionseinstellung und Befestigung gegenüber den Seitenwänden (15, 16) einer Isolatorkammer (14) bzw. der Schaltvorrichtung (22) erfolgen. Eine Löschkammer (32, 33), insbesondere ein Löschkäfig, weist bevorzugt eine Mehrzahl von im Wesentlichen radial zur Drehachse (A) des Rotationsschaltkörpers (23) ausgerichtete Löschbleche (34) auf. Die Löschbleche (34) können bevorzugt eine übereinstimmende Formgebung haben. Sie weisen insbesondere bevorzugt jeweils eine zur Drehachse (A) weisende Durchtrittsöffnung (35) auf. Die Durchtrittsöffnung (35) übergreift bevorzugt eine Mehrzahl von Kontaktschwertern (24, 25, 26, 27) an dem Rotationsschaltkörper (23). Es ist somit bevorzugt ein Löschkäfig vorgesehen, der zur Löschung von ein oder mehreren Lichtbögen ausgebildet ist, die zwischen einer Mehrzahl von Kontaktflächen an dem mindestens einen Kontaktschwert (24, 25, 26, 27) und einerseits dem Zuleitungs-Anschluss (20) oder andererseits dem Ableitungs-Anschluss (21) beim Trennen der elektrischen Verbindung auftreten können. Alternativ können zwei oder mehr Durchtrittsöffnungen (35) vorgesehen sein. Insbesondere kann jeweils eine Durchtrittsöffnung (35) für jeweils ein Paar von Kontaktschwertern (24, 25, 26, 27) vorgesehen sein.

Die Löschbleche (34) einer Löschkammer (32, 33) sind bevorzugt an einem Käferträger (36) angeordnet. Dieser weist gemäß der Darstellung in Figuren 3, 4 und 11 bevorzugt zwei quer zur Drehachse (A) ausgerichtete Grenzflächen (37) oder Grenzwandungen auf. Über diese Grenzflächen steht der Löschkäfig bevorzugt in einem isolierenden Kontakt mit einer der Seitenwände (15, 16).

Der Rotationsschaltkörper (23) wird bevorzugt in einer schnellen und sprungartigen Bewegung von der Geschlossen-Drehstellung (S1) in die Offen-Drehstellung (S2) versetzt. Diese sprungartige Bewegung kann auf beliebige Weise erzeugt werden, erfindungsgemäß durch den in den Figuren dargestellten Sprungantrieb (40). Der Sprungantrieb (40) ist dazu ausgebildet, den Rotationsschaltkörper (23) zu einer sprungartigen Schaltdrehung zu veranlassen, wobei insbesondere die vollständige Drehbewegung zwischen einer Geschlossen-Drehstellung (S1) und einer Offen-Drehstellung (S2) innerhalb einer vorgegebenen Schaltdauer erfolgt. Die vorgegebene Schaltdauer beträgt bevorzugt maximal 200 ms. Alternativ können andere Schalterdauern vorgesehen sein, insbesondere in einem Bereich von 100 ms bis 300 ms. Der Sprungantrieb (40) kann eine beliebige Ausbildung haben. Er weist bevorzugt einen mit dem Rotationsschaltkörper (23) drehmomentleitend verbundenen Abtriebsflansch (41) auf, sowie einen Kraftspeicher (42) zur sprungartigen Bewegung des Abtriebsflansches (41) und einen Antriebsflansch (43) zum Laden des Kraftspeichers (42). Der Sprungantrieb ist bevorzugt als rotatorischer Sprungantrieb ausgebildet. Die Bewegung des Abtriebsflansches (41) ist bevorzugt eine drehende Bewegung, insbesondere eine iterative und unidirektionale Drehbewegung.

Der Antriebsflansch (43) wird beispielsweise durch den (elektrischen) Antriebsmotor (45) und/oder einen Handantrieb (46) bewegt. Die Bewegung kann im Wesentlichen kontinuierlich erfolgen, während der Abtriebsflansch (41) entweder in der Geschlossen-Drehstellung (S1) oder in der Offen-Drehstellung (S2) gehalten ist. Die Bewegung des Antriebsflansches (43) kann insbesondere solange erfolgen, bis eine ausreichende Energiemenge in dem Kraftspeicher (42) enthalten ist. Anschließend kann eine Auslösung der sprungartigen Schaltdrehung erfolgen. Die Auslösung kann sofort bei Erreichen der notwendigen Ladung in dem Kraftspeicher (42) erfolgen. Alternativ kann die Auslösung zeitversetzt erfolgen.

Besonders bevorzugt weist der Restlast-Trennschalter (1) und insbesondere der Sprungantrieb (40) ein Auslösemittel (44) auf, das dazu ausgebildet ist, die sprungartige Schaltdrehung in Abhängigkeit von einem oder mehreren Kriterien auszulösen oder zu unterbinden. Das Auslösemittel (44) kann insbesondere dazu ausgebildet sein, die sprungartige Schaltdrehung zu unterbinden, wenn der Kraftspeicher (42) eine unzureichende Ladung oder Vorspannung aufweist.

Gemäß einer bevorzugten Variante weist der Restlast-Trennschalter eine Lasterkennung auf, die eine elektrische Last, insbesondere einen Stromfluss und/oder eine Spannung, zwischen dem Zuleitungs-Anschluss (20) und dem Ableitungs-Anschluss (21) überwacht. Die Lasterkennung kann für verschiedene Zwecke genutzt werden, insbesondere für eine Zustandsbewertung über die Sicherheit eines manuellen Zugriffs, für die Sperrung oder Entsperrung einer Drehstellung des mindestens einen Rotationsschalterkörpers (23), für die Auslösung einer Schaltdrehung und/oder für das Beschränken eines manuellen Zugriffs. Die Lasterkennung kann eine überwachte elektrische Last an dem Restlast-Trennschalter für die verschiedenen Zwecke mit einem oder mit mehreren Zulässigkeits-Grenzwerten vergleichen.

Beispielsweise kann über die Lasterkennung ermittelt werden, ob ein Sicherheitserfordernis für einen manuellen Zugriff zu dem Restlast-Trennschalter erfüllt ist. Das Sicherheitserfordernis kann bspw. vorsehen, dass ein manueller Zugriff nur dann als ungefährlich eingestuft wird, wenn die momentane Last einen ersten Zulässigkeits-Grenzwert unterschreitet, beispielsweise einen Kleinspannungs-Grenzwert von 50V. Alternativ kann ein anderer Wert für einen Kleinspannungs-Grenzwert vorgesehen sein.

Die Lasterkennung kann alternativ oder zusätzlich dazu ausgebildet, festzustellen, ob eine Restlast bzw. ein Reststrom oder eine Hauptlast bzw. ein Hauptstrom anliegt. Ein Reststrom bzw. eine Restlast wird bevorzugt erkannt, wenn die elektrische Last, insbesondere die Spannung und/oder der Stromfluss zwischen dem Zuleitungs-Anschluss (20) und dem Ableitungs-Anschluss (21) unterhalb eines (zweiten) Zulässigkeits-Grenzwertes liegt. Der zweite Zulässigkeits-Grenzwert kann bspw. derjenige Grenzwert sein, der auch als Zulässigkeits-Grenzwert für die Freigabe oder Auslösung einer Schaltdrehung herangezogen wird. Der zweite Zulässigkeits-Grenzwert kann insbesondere der Restlast-Grenzwert sein und bspw. beispielsweise 50 A / 900 V betragen. Alternativ sind andere Werte möglich, insbesondere maximale Spannungen von bis zu 1.500 V und/oder maximale Ströme von bis zu 100 A. Wiederum alternativ kann der zweite Zulässigkeits-Grenzwert ein Schaltlast-Grenzwert sein, der eine maximal zulässige elektrische Last kennzeichnet, die während einer Trennung der elektrischen Verbindung zwischen dem mindestens einen Zuleitungs-Anschluss (20) und dem mindestens einen Ableitungs-Anschluss (21) vorliegen darf. Der Schaltlast-Grenzwert kann sich von dem Restlast-Grenzwert unterscheiden.

Eine besonders einfache und kostengünstige Variante einer Lasterkennung sieht vor, dass ein Spannungswächter (92) eine über dem Restlast-Trennschalter (1), insbesondere zwischen dem mindestens einen Zuleitungs-Anschluss (20) und dem mindestens einen Ableitungs-Anschluss (21), anliegende Spannung auswertet. Wenn diese Spannung oberhalb des ersten Zulässigkeits-Grenzwertes liegt, der bspw. 50V beträgt (Kleinspannungs-Grenzwert), wird ermittelt, dass ein unsicherer Zustand vorliegt, der eine Beschränkung des manuellen Zugriffs zu dem Restlast-Trennschalter (1) veranlasst. Die Zugriffsbeschränkung kann durch beliebige Mittel herbeigeführt werden. Ein erstes Zugriffsbeschränkungsmittel kann eine Anzeigevorrichtung sein, die eine Warnung über den unsicheren Zustand vermittelt. Die Warnung kann auf beliebige Weise vermittelt werden, bspw. durch eine Textanzeige und/oder geeignete Symboldarstellungen.

Alternativ oder zusätzlich kann während eines unsicheren Zustandes eine elektrische Versorgungsverbindung zu dem Antriebsmotor (45) unterbrochen werden, bspw. durch ein in dem Spannungswächter (92) enthaltenes Relais oder ein anderes geeignetes Schaltmittel.

Wiederum alternativ oder zusätzlich kann eine Rotationssperrung aktiviert werden, die ein Umschalten des mindestens einen Rotationsschaltkörpers (23) unterbindet. Eine Rotationssperrung kann durch beliebige Mittel erreicht werden, insbesondere durch ein mechanisches Blockademittel. Eine bevorzugte Ausführung für ein mechanisches Blockademittel sieht vor, dass ein Sperrriegel, ein Sperrbolzen o.Ä. den mindestens einen Rotationsschaltkörper (23) und/oder den Abtriebsflansch (41) des Sprungantriebs (40) in der Rotationsrichtung gegenüber einem Gehäuseteil des Restlast-Trennschalters (1) festlegt. Der Sperrriegel oder Sperrbolzen kann bspw. durch ein elektrisches Schaltmittel wie ein Solenoid betätigt sein. Er kann insbesondere in einer Entsperr-Richtung durch eine elastische Vorspannkraft beaufschlagt sein und durch das elektrische Schaltmittel in der Sperr-Richtung verlagert werden, wenn bzw. solange der unsichere Zustand ermittelt wird.

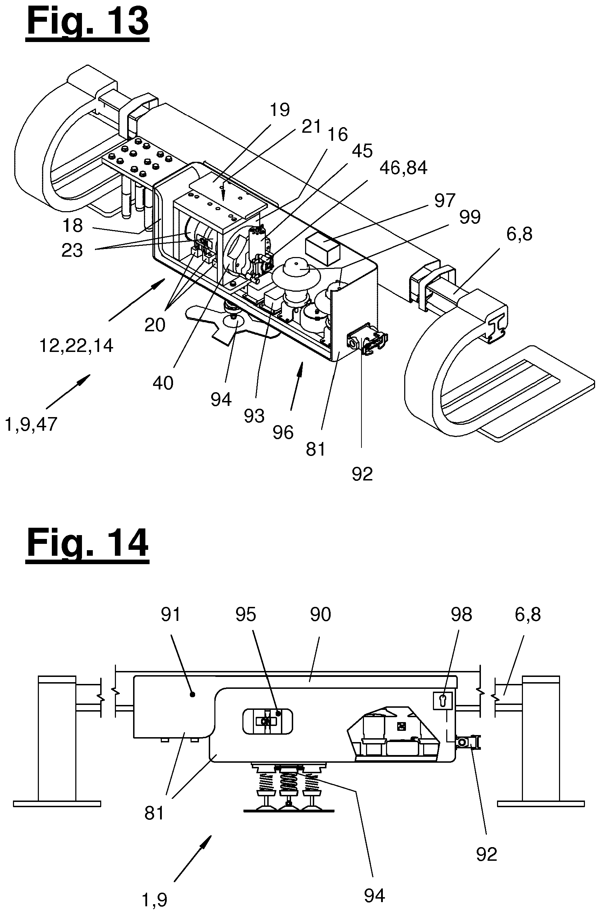

Nochmals alternativ oder zusätzlich kann eine Schutzeinhausung (81) des Rotations-Trennschalters (1) gesteuert verriegelt werden, wenn bzw. solange der unsichere Zustand vorliegt. Hierfür kann ein ähnliches oder dasselbe Blockademittel verwendet werden, das zuvor für die Sperrung der Drehung des Rotationsschaltkörpers (23) erläutert wurde. Alternativ kann ein steuerbares Schloss (98) verwendet werden (vgl. Figur 14). Weiter unten werden die Schutzeinhausung (81) und weitere Sicherheitsaspekte erläutert.

Das Anliegen einer Hauptlast bzw. eines Hauptstroms wird bevorzugt erkannt, wenn zumindest einer der vorgenannten Grenzwerte überschritten wird, insbesondere wenn ein Restlast-Grenzwert oder ein Schaltlast-Grenzwert überschritten wird.

Gemäß einer bevorzugten Ausführung kann vorgesehen sein, dass zusätzlich zu dem Überschreiten eines Kleinspannungs-Grenzwerts oder zusätzlich zu dem Überschreiten eines Restlast-Grenzwertes das Überschreiten oder Unterschreiten eines zugehörigen Vorbereitungs-Grenzwerts überprüft wird, insbesondere durch die Lasterkennung des Restlast-Trennschalters (1). Der Vorbereitungs-Grenzwert kann einen vom Kleinspannungs-Grenzwert oder vom Restlast-Grenzwert unterschiedlichen Wert haben. Er kann insbesondere um einen Hysterese-Schwellenwert größer sein als der Kleinspannungs-Grenzwert oder Restlast-Grenzwert. Der Vorbereitungs-Grenzwert kann bspw. 55 Volt betragen, während der Kleinspannungs-Grenzwert 45 Volt beträgt. Alternativ oder zusätzlich können die vorgenannten Grenzwerte über einen Stromwert oder einen Leistungswert oder einen sonstigen geeigneten Parameter zur Bestimmung einer Last festgelegt sein.

Durch die Verwendung von zwei zusammengehörigen Grenzwerten, die durch einen Hysterese-Schwellenwert beabstandet sind, kann noch genauer bestimmt werden, in welchem Wertebereich eine momentane Last am Restlast-Trennschalter (1) ist. Es kann insbesondere eine Fallunterscheidung zur Bestimmung eines momentanen Lastfalls ausgeführt werden, wobei in Abhängigkeit vom ermittelten Lastfall die notwendigen Maßnahmen zur Vorbereitung, Durchführung und Überprüfung einer Umschaltung zeitlich gestaffelt ausgeführt werden. Wenn bspw. eine momentane Last von 100 Volt anliegt, würde festgestellt, dass die anliegende Last oberhalb des Kleinspannungs-Grenzwerts und oberhalb des Vorbereitungs-Grenzwerts liegt. Dieser Lastfall kann als Ausschluss-Lastfall bewertet werden, in dem jeglicher manueller Zugriff auf den Restlast-Trennschalter verwehrt wird.

Wenn eine Last von 50 Volt anliegt, d.h. allgemein ausgedrückt eine momentane Last, die geringer ist als der Vorbereitungs-Grenzwert, aber (noch) höher als der Kleinspannungs-Grenzwert, dann würde festgestellt, dass ein Übergangs-Lastfall vorliegt. Im Übergangs-Lastfall kann eine Trennung der elektrischen Verbindung zumindest temporär verweigert werden. Es können allerdings vorbereitende Maßnahmen wie das Laden des Elektromotors (45) und/oder das Entriegeln des steuerbaren Schlosses (98) freigegeben werden.

Wenn gemäß dem obigen Beispiel eine momentane Last von 40 Volt ermittelt wird, d.h. allgemein ausgedrückt eine momentane Last die unterhalb des Kleinspannungs-Grenzwerts sowie unterhalb des Vorbereitungs-Grenzwerts liegt, wird festgestellt, dass ein Freigabe-Lastfall vorliegt, bei dem eine empfangene Anfrage für das Trennen der elektrischen Verbindung direkt umgesetzt sowie ein manueller Zugriff zum Restlast-Trennschalter direkt gewährt werden können.

Eine Unterscheidung von Lastfällen durch Verwendung von zwei Grenzwerten, die durch einen Hysterese-Schwellenwert zueinander beabstandet sind, kann einfach oder mehrfach für das Trennen sowie das Herstellen der elektrischen Verbindung vorgesehen werden. Ferner kann die Durchführung einer Umschaltung von der Geschlossen-Drehstellung in die Offen-Drehstellung und/oder von der Offen-Drehstellung in die Geschlossen-Drehstellung in mindestens zwei Phasen erfolgen, was nachfolgend anhand eines Beispiels erläutert wird.

Eine empfangene Anfrage für das Trennen der elektrischen Verbindung am Restlast-Trennschalter (1) kann zu einer Reaktion in zwei Phasen führen, insbesondere in einer Vorbereitungs-Phase und in einer Auslöse-Phase. In der Vorbereitungs-Phase können Maßnahmen zur Vorbereitung einer Schaltbewegung getroffen werden, wobei die Vorbereitungs-Phase bevorzugt eine maximale vorbestimmte Zeitdauer aufweist. In der Auslöse-Phase kann das tatsächliche Umschalten erfolgen, also die Trennung oder Herstellung der elektrischen Verbindung. Zusätzlich können in der Auslöse-Phase der nachfolgend erreichte Schaltzustand und/oder die nachfolgende momentane Lase überwacht werden. Ein Übergang von der Vorbereitungs-Phase in die Auslöse-Phase kann erfolgen, wenn und sofern innerhalb der vorbestimmten Zeitdauer der Vorbereitungs-Phase festgestellt wird, dass die Vorbereitungsmaßnahmen abgeschlossen sind und die momentane Last (noch oder inzwischen) einen Zulässigkeits-Grenzwert unterschreitet, insbesondere den Restlast-Grenzwert oder den Kleinspannungs-Grenzwert.

Die Durchführung der Trennung oder Herstellung einer elektrischen Verbindung kann alternativ oder zusätzlich von einer zusätzlichen externen Eingabe abhängig gemacht werden, insbesondere von dem Empfang einer zusätzlichen Trenn-Bestätigung oder Einschalt-Bestätigung.

Wenn während der Vorbereitungs-Phase eine der notwendigen Bedingungen (Vorbereitungsmaßnahmen abschließen, Unterschreitung des Zulässigkeits-Grenzwerts, Empfang der Bestätigung) nicht eintritt oder wieder entfällt, kann die Auslösung der Umschaltung verweigert werden. Wenn eine neue Anfrage zur Trennung oder Herstellung der elektrischen Verbindung empfangen wird, kann der o.g. Vorgang erneut ausgeführt werden.

In einer bevorzugten Ausführung können die Einleitung der Vorbereitungs-Phase und/oder der Abschluss der Vorbereitungsmaßnahmen und/oder das zusätzliche Unterschreiten des Zulässigkeits-Grenzwerts und/oder der (erfolgreiche) Abschluss der Auslöse-Phase und oder etwaig auftretende Fehlerzustände durch eine oder mehrere Statusmeldungen am Restlast-Trennschalter (1) angezeigt und/oder durch Versand der Statusmeldung(en) mitgeteilt werden. Hierdurch wird die Nachvollziehbarkeit des Zustands am Restlast-Trennschalter (1) für einen Bediener deutlich verbessert.

Die Aufteilung der Ausführung einer Umschaltbetätigung in eine Vorbereitungs-Phase und eine Auslöse-Phase kann auch bei Überprüfung von nur einem Zulässigkeits-Grenzwert, insbesondere dem Restlast-Grenzwert vorgesehen sein. In diesem Fall kann ein Umschalten von der Vorbereitungs-Phase in die Auslöse-Phase erfolgen, wenn und sofern innerhalb der vorgegebenen Zeitdauer die Vorbereitungsmaßnahmen abgeschlossen sind und die momentane Last (weiterhin oder ununterbrochen) unterhalb des Restlast-Grenzwerts liegt und/oder wenn oder sofern zusätzlich eine Trenn-Bestätigung empfangen wird. Eine Umschaltbetätigung kann dabei ein Trennen der elektrischen Verbindung und ebenso ein Schließen der elektrischen Verbindung umfassen.

Zum Ende der Auslöse-Phase kann überprüft werden, ob die momentane Last am Restlast-Trennschalter (1) unter einen Trennzustand-Grenzwert fällt bzw. gefallen ist. Der Trennzustand-Grenzwert kann ein Spannungs-Grenzwert gemäß den vorhergehenden Beispielen und/oder ein StromGrenzwert oder ein Leistungsgrenzwert sein, insbesondere der oben erwähnte Kleinspannungs-Grenzwert. Wenn die momentane Last den Trennzustand-Grenzwert nach dem Umschalten des Rotations-Schaltkörpers in die Offen-Drehstellung unterschreitet, wird festgestellt, dass die elektrische Verbindung zwischen dem Zuleitungs-Anschluss (20) und dem Ableitungs-Anschluss (21) tatsächlich getrennt und somit ein sicherer Zustand erreicht ist. Ein erfolgreicher Abschluss der Auslöse-Phase kann festgestellt und angezeigt oder mitgeteilt werden, wenn einerseits ermittelt wird, dass der oder die Rotationsschaltkörper (23) die Offen-Drehstellung erreicht haben und andererseits die momentane Last den Trennzustand-Grenzwert unterschritten hat. Wenn eine dieser Bedingungen nicht oder nicht innerhalb eines vorgegebenen Zeitintervalls erreicht wird, kann ein Fehlerzustand erkannt und als Statusmeldung angezeigt oder versendet werden.

Das Herstellen einer elektrischen Verbindung kann unterbunden werden, wenn der Rotatsions-Schaltkörper (23) in der Offen-Drehstellung ist und festgestellt wird, dass die momentane Last den Trennzustand-Grenzwert überschreitet, oder wenn festgestellt wird, dass die momentane Last den Restlast-Grenzwert überschreitet.

Alternativ oder zusätzlich zu den obigen Ausführungen kann das Anliegen einer Hauptlast dadurch erkannt werden, dass ein Schaltzustand eines (entfernten) Hauptlast-Trennschalters (3) abgefragt wird, was nachfolgend erläutert wird. Die Abfrage des Schaltzustands des Hauptlast-Trennschalters (3) erfolgt bevorzugt durch den Austausch von Datennachrichten, insbesondere mit einer (entfernten) Überwachungsstation (US).

Figur 2 zeigt eine Stromversorgung für ein elektrisch betriebenes Verkehrsmittel (7) in einer schematischen Ansicht. Das elektrische Verkehrsmittel (7) ist vorliegend ein Zug oder eine S-Bahn, die auf einem Gleis bzw. einem Streckenabschnitt (6) fährt. Das elektrische Verkehrsmittel (7) bezieht seinen Fahrstrom über einen Stromabgreifer (10) von einem Fahrstrom-Versorgungsleiter (8), der vorliegend als Stromschiene ausgebildet ist.

Der Fahrstrom-Versorgungsleiter (8) ist an einer Einspeisestelle (9) über den Restlast-Trennschalter (1) gemäß der vorliegenden Offenbarung mit einer Zuführleitung (4) verbunden. Die Einspeisestelle (9) ist somit die Versorgungsleiter-Einspeisestelle.

Die Zuführleitung (4) kann eine große Länge haben, beispielsweise eine Länge von mehreren Kilometern. Sie führt zu einer Spannungsquelle (2), welche die Hauptlast-Stromversorgung bzw. die Fahrbetriebs-Stromversorgung bereitstellt. In der Regel ist an der Spannungsquelle (2) bzw. in der Nähe der Spannungsquelle (2) der Hauptlast-Trennschalter (3) angeordnet. Der elektrische Leitungsverbund zwischen dem Hauptlast-Trennschalter und dem Fahrstrom-Versorgungsleiter (8) kann eine erhebliche Restkapazität (5) aufweisen, die vorliegend als Kondensator illustriert ist. Häufig liegt ein Hauptteil dieser Restkapazität (5) im Bereich der Zuführleitung. Durch die Restkapazität (5) kann auch nach dem Öffnen eines Hauptlast-Trennschalters (3) noch für einige Zeit eine Last, insbesondere die zulässige Restlast an der Einspeisestelle (9) bzw. dem Fahrstrom-Versorgungsleiter (8) anliegen, welche durch den Restlast-Trennschalter (1) gemäß der vorliegenden Offenbarung elektrisch von dem Fahrstrom-Versorgungsleiter (8) zu trennen ist.

Gegebenenfalls liegt eine Überwachungsstation (US) vor, die datentechnisch mit der Spannungsquelle (2) und/oder dem Hauptlast-Trennschalter (3) und/oder dem Restlast-Trennschalter (1) gemäß der vorliegenden Offenbarung verbunden ist. Die Überwachungsstation kann den Schaltzustand des Hauptlast-Trennschalters abfragen oder auf sonstige Weise bestimmen, ob die Hauptlast an der Einspeisestelle (9) anliegt. Das Auslösemittel (44) kann von der Überwachungsstation (US) eine Information darüber beziehen, ob die Hauptlast anliegt oder nicht und eine Schaltbewegung des Rotationsschaltkörpers (23) unterbinden, wenn die Hauptlast anliegt. Alternativ kann eine direkte Kommunikation zwischen dem Auslösemittel (44) und Hauptlast-Trennschalter (2) vorliegen, um den Schaltzustand des Hauptlast-Trennschalters (2) zu beziehen.

Die in den Figuren gezeigten Ausführungsvarianten des Restlast-Trennschalters (1) sind dazu ausgebildet, dass sie einerseits durch den motorischen Antrieb (45) und andererseits durch einen Handantrieb (46) betätigbar sind. Eine Betätigung durch den Motor (45) kann beispielsweise wie folgt stattfinden:
Von einem externen Signalgeber wird eine Anforderung zur Trennung der elektrischen Verbindung an der Einspeisestelle (9) empfangen. Die Anforderung kann beispielsweise von der Überwachungsstation (US) oder von einer Betätigungseinrichtung am Streckenabschnitt (6) erzeugt werden. Gemäß einem optionalen Schritt prüft der Restlast-Trennschalter (1) und insbesondere das Auslösemittel (44), ob eine Hauptlast anliegt.

Der Motor (45) wird betrieben, um den Sprungantrieb (40) bzw. den darin enthaltenen Kraftspeicher (42) zu laden, insbesondere unter der Bedingung, dass festgestellt wurde, dass keine Hauptlast sondern maximal eine Restlast anliegt.

Es wird eine sprunghafte Drehbewegung ausgelöst, so dass der Rotationsschaltkörper (23) von der Geschlossen-Drehstellung (S2) in die Offen-Drehstellung (S1) bewegt wird. Die Auslösung der sprunghaften Drehbewegung erfolgt, wenn und insbesondere sobald der Kraftspeicher (42) die vorgeschriebene Ladung erreicht hat. Alternativ erfolgt die Auslösung der sprunghaften Drehbewegung unter der Bedingung, dass eine Lasterfassung festgestellt hat, dass nur die zulässige Restlast zwischen dem mindestens einen Zuleitungs-Anschluss (20) und dem mindestens einen Ableitungs-Anschluss (21) anliegt, jedoch nicht die Hauptlast.

Alternativ oder zusätzlich kann der Sprungantrieb (40) durch eine Betätigung des Handantriebs (46), insbesondere eine iterative Bewegung eines Ratschenhebels (84) geladen werden. Auch in diesem Fall kann die Sprungbewegung ausgelöst werden, sobald die vorgeschriebene Ladung in den Kraftspeicher (42) erreicht ist. Zusätzlich kann überprüft werden, dass zum Zeitpunkt der Auslösung keine Hauptlast sondern maximal die zulässige Restlast anliegt.

Mit anderen Worten ist das Auslösemittel (44) bevorzugt dazu ausgebildet, eine manuelle und/oder motorisch herbeigeführte Betätigung der Schaltvorrichtung (22) nur zuzulassen, wenn maximal die zulässige Restlast anliegt.

Gemäß einem weiter unten beschriebenen Aspekt kann die Lasterkennung auch genutzt werden, um eine Zugriff zu dem Restlast-Trennschalter (1) und insbesondere zu dem Handantrieb (46) bzw. dem Ratschenhebel (84) davon abhängig gemacht wird, dass nur eine zulässige Restlast anliegt, nicht jedoch die Hauptlast.

Der Handantrieb (46) kann beliebig ausgebildet sein. In einer bevorzugten Ausführungsvariante wirkt er auf den Antriebsflansch (43) des Sprungantriebs insbesondere in mechanischer Überlagerung zu dem Antriebsmotor (45). Besonders bevorzugt weist der Restlast-Trennschalter (1) und insbesondere der Antriebsmotor (45) oder der Sprungantrieb (40) ein Untersetzungsgetriebe auf. Der Handantrieb (46) kann über dieses Untersetzungsgetriebe auf den Antriebsflansch (43) des Sprungantriebs (40) wirken, so dass nur geringe Handkräfte notwendig sind, um den Sprungantrieb (40) aufzuladen. Zur Betätigung des Handantriebs kann ein beliebiges manuell greifbares Instrument vorgesehen sein. Bevorzugt ist dies ein Ratschenhebel (84), der in einer Hin- und Herbewegung bewegbar ist. Alternativ kann eine Handkurbel vorgesehen sein, die ebenfalls (optional) über einen Ratschenmechanismus verfügen kann. Ein Ratschenmechanismus hat den Vorteil, dass das Betätigungsinstrument bei einer motorischen Betätigung des Sprungantriebs nicht mitbewegt wird.

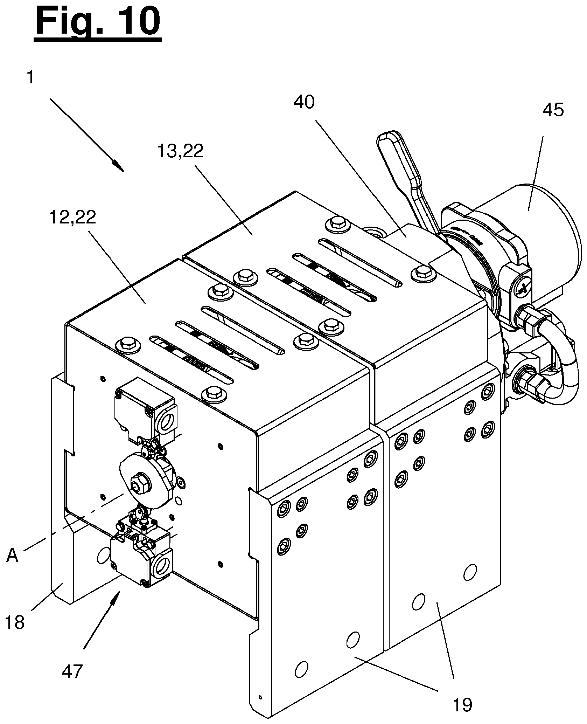

Gemäß der Darstellung in Figuren 1 und 10 weist der Restlast-Trennschalter (1) gemäß der vorliegenden Offenbarung bevorzugt ein Lagefeststellungsmittel (47) auf, dass dazu ausgebildet ist, die Drehlage des mind. einen Rotationsschaltkörpers (23) zu erfassen, bzw. das Vorliegen einer Geschlossen-Drehstellung (S1) oder einer Offen-Drehstellung (S2). Das Lagefeststellungsmittel (47) kann beliebig ausgebildet sein. In der Darstellung gem. Figuren 1 und 10 ist das Lagefeststellungsmittel (47) durch eine Nockenscheibenerfassung gebildet. Eine Nockenscheibe ist auf der Drehachse (A) angeordnet und drehmomentfest mit dem mindestens einen Rotationsschaltkörper (23) verbunden. Die Nockenscheibe weist mind. eine und bevorzugt zwei Nocken auf, die einen oder mehrere am Umfang der Nockenscheibe angeordnete Kontaktschalter betätigen. In dem Beispiel von Figur 1 ist ein erster Kontaktschalter durch eine Nocke eingedrückt, während ein zweiter Kontaktschalter nicht eingedrückt ist. Der zweite Kontaktschalter ist in Bezug auf die Drehachse (A) orthogonal zu dem ersten Kontaktschalter angeordnet. Das Vorliegen einer Geschlossen-Drehstellung (S1) oder einer Offen-Drehstellung (S2) wird hier erfasst, wenn gem. einer bekannten Codierung einer der beiden Kontaktschalter aktiviert ist und der andere Kontaktschalter nicht aktiviert ist. Wenn hingegen beide Kontaktschalter nicht aktiviert sind, befindet sich der Rotationsschaltkörper (23) in einer Zwischenlage.

Auf Basis einer solchen Zwischenlage kann durch das Lagefeststellungsmittel (47) zusätzlich erkannt werden, ob sich der Rotationsschaltkörper (23) für eine unzulässig lange Zeitdauer außerhalb der Geschlossen-Drehstellung (S1) und außerhalb der Offen-Drehstellung (S2) befindet. In einem solchen Zustand kann ein Alarmzustand ausgelöst werden, der beispielsweise an die Überwachungsstation (US) mitteilbar ist. Ferner kann in einem solchen Fall ein manueller Zugriff zu dem Restlast-Trennschalter beschränkt werden.

Der Restlast-Trennschalter bzw. der mind. eine Rotationsschaltkörper (23) weist bevorzugt eine einseitig beschränkte Drehrichtung zur Ausführung der Schaltbewegung(en) auf. So kann in dem Beispiel von Figuren 3 und 4 beispielsweise immer und ausschließlich eine Rechtsdrehung vorgesehen sein, um den Rotationsschaltkörper (23) iterativ von einer Geschlossen-Drehstellung (S1) in eine Offen-Drehstellung (S2) und wieder in eine Geschlossen-Drehstellung (S1) usw. zu bewegen. In diesem Fall ist es ausreichend, nur an Nachlauf-Seite eines Zuleitungs-Anschlusses (20) und eines Ableitungs-Anschlusses (21) eine Löschkammer anzuordnen, d.h. in dem tangential anschließenden Bereich, der gemäß der vorgegebenen (unidirektionalen) Drehrichtung beim Umschalten von einer Geschlossen-Drehstellung (S1) in eine Offen-Drehstellung (S2) durch die Kontaktflächen (28, 29, 30, 31) durchquert wird. Auf der Vorlauf-Seite kann hingegen auf eine Löschkammer verzichtet werden, weil dort - gemäß der vorgegebenen Drehrichtung - nicht mit dem Auftreten eines Lichtbogens zu rechnen ist.

Durch die bevorzugte unidirektionale und zyklische Betätigung des Rotationsschaltkörpers (23) wird eine besonders einfache Steuerbarkeit und Überwachbarkeit des Restlast-Trennschalters (1) erreicht. Es ist insbesondere kein Richtungs-Umschaltgetriebe und ebenso keine Drehrichtungsumkehrsteuerung erforderlich. Vielmehr kann mit einem einzigen Drehmotor (45), der in einer einzigen Drehrichtung angetrieben wird, sowohl das Trennen der elektrisch leitenden Verbindung an dem Restlast-Trennschalter (1) bzw. der Schaltvorrichtung (22) sowie deren Wiederherstellung ausgelöst werden. Der Sprungantrieb (40) ist dementsprechend bevorzugt dazu ausgebildet, iterative sprungartige Drehbewegungen in derselben Drehrichtung bei gleichbleibenden Winkelintervallen auszulösen. Die Winkelintervalle können insbesondere jeweils 90 Winkelgrad betragen.

Gemäß einer alternativen Ausführung kann eine beidseitige Drehbeweglichkeit des Rotationsschaltkörpers (23) vorgesehen sein. In diesem Fall können das Trennen der elektrischen Verbindung, d.h. das Umschalten zwischen einer Geschlossen-Drehstellung (S1) und einer Offen-Drehstellung (S2), in einer ersten vorgegebenen Bewegungsrichtung und das Schließen der elektrischen Verbindung in der Gegenrichtung erfolgen, was ebenfalls dazu führt, dass nur auf der Nachlauf-Seite der für das Trennen vorgegebenen Bewegungsrichtung Löschkammern vorgesehen werden müssen. Wiederum alternativ kann eine freie Bewegungsrichtung des Rotationsschaltkörpers (23) vorgesehen sein. In diesem Fall können Löschkammern in beiden tangential anschließenden Bereichen neben einem Zuleitungs-Anschluss (20) und einem Ableitungs-Anschluss (21) vorsehen werden.

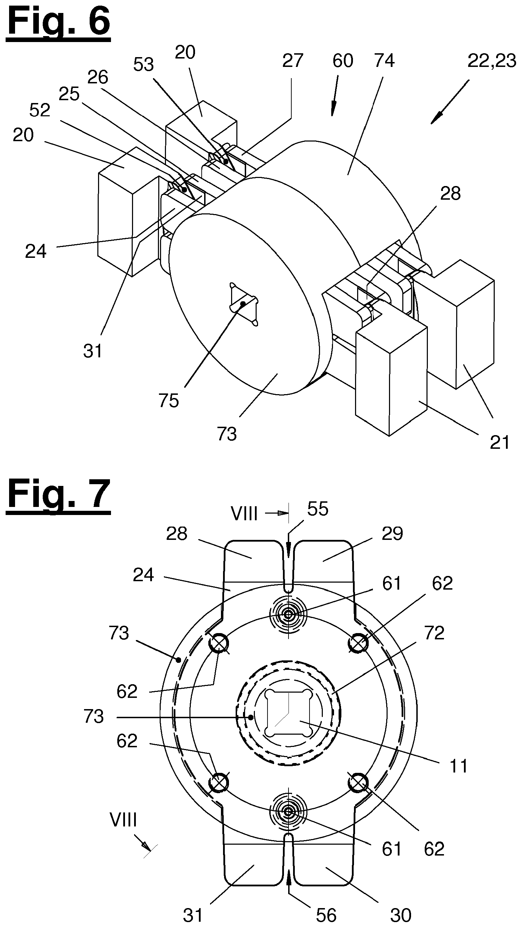

Figuren 6 bis 9 illustrieren eine bevorzugte Ausführungsvariante der Schaltvorrichtung (22) bzw. eines Rotationsschaltkörpers (23). Der Rotationsschaltkörper (23) weist mind. ein Paar und bevorzugt zwei Paare von Kontaktschwertern (24, 25, 26, 27) auf. Dementsprechend sind jeweils zwei Kontaktschwerter (24, 25 / 26, 27) parallel und koaxial zur Drehachse (A) angeordnet. Ein Paar von Kontaktschwertern (24, 25 / 26, 27) ist zur gemeinsamen Kontaktierung von einerseits einem Zuleitungs-Anschluss (20) und andererseits einem Ableitungs-Anschluss (21) ausgebildet. An dem Zuleitungs-Anschluss (20) und dem Ableitungs-Anschluss (21) ist bevorzugt jeweils eine Kontaktzunge (51, 52, 53, 54) vorgesehen, die in einer Geschlossen-Drehstellung (S1) zwischen dem Paar von Kontaktschwertern (24, 25 / 26, 27) berührend aufgenommen ist (vgl. Fig. 6).

Ein Kontaktschwert (24, 25, 26, 27) - insbesondere jedes der Kontaktschwerter - weist bevorzugt eine erste Mehrfachanordnung von Kontaktflächen (28, 29) zur Berührung einer Kontaktzunge (51) am Zuleitungs-Anschluss (20) und eine weitere Mehrfachanordnung von Kontaktflächen (30, 31) zur Berührung einer Kontaktzunge (53) am Ableitungs-Anschluss (21) auf. Durch die Bildung von Paaren von Kontaktschwertern einerseits und die Mehrfachanordnung von Kontaktflächen andererseits wird die Bildung von redundanten elektrischen Kontaktzonen begünstigt. Gem. der Darstellung von Fig. 6 kann jede Kontaktzunge (51, 52, 53, 54) mit insgesamt vier Kontaktflächen an dem Paar von Kontaktschwertern (24, 25 / 26, 27) in berührendem Kontakt stehen. Die einander berührenden Flächen sind bevorzugt mit einer elektrisch hoch leitfähigen Beschichtung ausgestattet, insbesondere mit einer Silber-Beschichtung oder Silber-Plattierung.

Gem. der Darstellung in Fig. 7 sind die Kontaktflächen (28, 29 / 30, 31) in einer Mehrfachanordnung bevorzugt durch eine dazwischenliegende Materialausnehmung (55, 56) getrennt, insbesondere körperlich getrennt. In der bevorzugten Ausführung gemäß Figur 7 umfasst jede Mehrfachanordnung genau zwei Kontaktflächen (28, 29 / 30, 31), die insbesondere symmetrisch zu einer Materialausnehmung (55, 56) angeordnet sind. Diese Anordnung hat sich als optimal erwiesen, um eine mechanische Flächenpressung zwischen den mehreren Kontaktzonen zu vereinheitlichen und somit homogene Durchtrittswiderstände in den Kontaktzonen zu begünstigen. Wenn mehr als zwei Kontaktflächen (28, 29 / 30, 31) in einer Mehrfachanordnung vorgesehen sind, können entsprechend weitere Materialausnehmungen vorgesehen sein.

Der Rotationskörper (23) weist bevorzugt ein (isolierendes) Gehäuse (60) auf, das ein- oder mehrteilig ausgebildet sein kann. An oder in dem Gehäuse (60) sind bevorzugt ein oder mehrere Paare von Kontaktschwertern in Radialrichtung festgelegt und in Axialrichtung mit Spiel gelagert. Das Toleranzmaß für eine (lokale) Beweglichkeit eines Kontaktschwertes in Axialrichtung kann durch geeignete Mittel begrenzt sein.

Durch die radiale Festlegung wird eine Drehstellung der Kontaktschwerter (24, 25, 26, 27) eindeutig durch die Drehlage des Gehäuses (60) festgelegt, während in der Axialrichtung (parallel zur Drehachse A) die Kontaktschwerter (24, 25, 26, 27) zumindest in einem vorgegebenen Toleranzbereich beweglich sind, um sich möglichst in eine optimale Berührungslage zu den Kontaktzungen (51, 52, 53, 54) begeben zu können. Die Einnahme der optimalen Berührungslage beim Übergang in die Geschlossen-Drehstellung (S2) wird bevorzugt durch eine mechanische Vorspannung der Kontaktschwerter und durch Anlaufschrägen an den Kontaktflächen und/oder den Kontaktzungen bewirkt, was weiter unten mit zusätzlichen Details erläutert wird.

Gem. Darstellung in den Figuren 7 bis 9 können an dem Rotationsschaltkörper (23) mind. ein Axiallagerungselement (61) und mind. ein davon unabhängiges Radiallagerungselement (62) vorgesehen sein. Das Axiallagerungselement (61) ist dazu ausgebildet, die Kontaktschwerter (24, 25 / 26, 27) eines Paares aufzunehmen und relativ zueinander mit Axialspiel zu positionieren und insbesondere vorzuspannen. Die Vorspannung ist insbesondere zur Innenseite des Paares, d.h. jeweils zu einer Mittelebene zwischen den Kontaktschwertern (24, 25 / 26, 27) eines Paares gerichtet. Das Paar insgesamt kann sich in Axialrichtung (parallel zur Drehachse A) bewegen, insbesondere für sich allein oder gemeinsam mit einem weiteren Paar. Das heißt, es sind bevorzugt eine Binnen-Beweglichkeit der Kontaktschwerter (24, 25 /26, 27) in einem Paar sowie eine Global-Beweglichkeit des Paars oder mehrerer Paare vorgesehen, die jeweils unterschiedlichen Toleranzmaßen unterliegen können.

Das mind. eine Radiallagerungselement (62) ist dazu ausgebildet, ein oder mehrere Kontaktschwerter und insbesondere alle Kontaktschwerter (24, 25, 26, 27) eines Rotationsschaltkörpers (23) in Radialrichtung festzulegen, d.h. drehmomentfest mit dem Gehäuse (60) zu verbinden. Das Radiallagerungselement (62) hat bevorzugt keine Lagerungswirkung in Axialrichtung, d.h. parallel zur Drehachse (A).

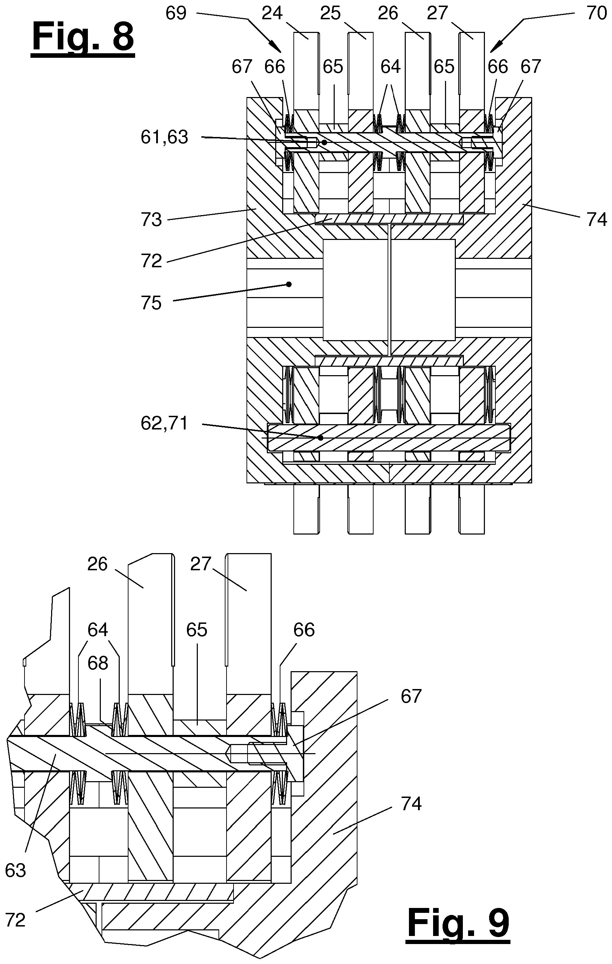

In der Schnittdarstellung von Figur 8 sind bevorzugte Ausführungsformen eines Axiallagerungselements (61) und eines Radiallagerungselements (62) in einer Schnittdarstellung gezeigt. Die Schnittdarstellung bezieht sich auf eine Schnittlinie VIII-VIII in Figur 7. Figur 9 zeigt eine vergrößerte Ansicht des rechten oberen Bereiches von Figur 8.

Ein Axiallagerungselement (61) ist hier durch einen Tragbolzen (63), mind. ein Federelement (64, 66) und einen Abstandshalter (65) gebildet. Darüber hinaus kann das Axiallagerungselement (61) ein oder mehrere Befestigungsmittel (67, 68) umfassen. Als Federelemente (64, 66) kommen bevorzugt mechanische Federn in Betracht, insbesondere Tellerfedern und Tellerfeder-Pakete. An dem Tragbolzen (63) sind gem. der Darstellung in Figur 8 zwei gespannte Lagerungs-Anordnungen (69, 70) gebildet, die jeweils ein Paar von Kontaktschwertern (24, 25 / 26, 27) lagern und vorspannen. Alternativ können an einem Tragbolzen (63) nur eine oder eine beliebige andere Anzahl von Lagerungs-Anordnungen (69, 70) vorgesehen sein.

Die gezeigte Lagerungsanordnung (69, 70) umfasst in der Axialrichtung (A) eine geschichtete Anordnung von einem ersten Federelement (64), einem ersten Kontaktschwert (24), einem Abstandshalter (65), einem zweiten Kontaktschwert (25) sowie optional einem zweiten oder weiteren Federelement (66). Als Abstandshalter (65) dient hier beispielhaft eine Hülse, die auf den Tragbolzen aufgesetzt ist. Die Lagerungsanordnung (69, 70) ist in dem Beispiel von Figuren (8, 9) zur Innenseite hin an einem Überstand des Tragbolzens angelegt, der ein erstes Befestigungsmittel bildet, sowie nach außen hin durch eine Schraube befestigt, die ein zweites Befestigungsmittel (67) bildet. Alternativ können beliebige andere Befestigungsmittel vorgesehen sein, wie beispielsweise Sprengringe, Sicherungsstifte, Wellenmuttern, aufgeschweißte Vorsprünge usw.

Die Kontaktschwerter (24, 25 / 26, 27) in einer gespannten Lagerungs-Anordnung (69, 70) werden durch die ein oder mehreren Federelemente (64, 66) in der Offen-Drehstellung mit Vorspannung an dem dazwischen liegenden Abstandshalter (65) angelegt. Somit gibt der Abstandshalter mit minimale lichte Weite zwischen den Kontaktflächen (28, 29 / 30, 31) eines Paares vor. Beim Übergang in die Geschlossen-Drehstellung (S2) kommen die Kontaktflächen (28, 29 / 30, 31) mit einer zugeordneten Kontaktzunge (51, 52, 53, 54) in berührenden Kontakt, insbesondere über Anlaufschrägen. Die minimale lichte Weite zwischen den Kontaktflächen (28, 29 / 30, 31) ist bevorzugt geringer als die Breite der zugeordneten Kontaktzunge (51, 52, 53, 54), sodass die Kontaktschwerter (24, 25, 26, 27) beim Aufgleiten auf einer Kontaktzunge (51, 52, 53, 54) entgegen der Vorspannung der Federelemente (64, 66) auseinander bewegt bzw. gespreizt werden. Hierbei werden die ein oder mehreren Federelemente (64, 66) elastisch komprimiert, sodass sie die Vorspannkraft auch weiterhin auf die Kontaktschwerter (24, 25, 26, 27) bzw. die Kontaktflächen (28, 29, 30, 31) aufrechterhalten. Durch jeden berührenden Kontakt zwischen einer Kontaktzunge (51, 52, 53, 54) und einer Kontaktfläche (28, 29, 30, 31) wird eine Kontaktzone gebildet, in der der berührende Kontakt bevorzugt mit mechanischer Vorspannung gehalten ist.

Gemäß der unteren Hälfte von Figur 8 kann ein Radiallagerungselement (61) bevorzugt durch einen Führungsstift gebildet sein, der an dem Rotationschaltkörper (23), insbesondere dem Gehäuse (60), in Rotationsrichtung festgelegt ist und mindestens ein Kontaktschwert (24, 25, 26, 27) gegenüber dem Rotationskörper (23) in Radialrichtung fixiert. Dabei ist das mindestens eine Kontaktschwert bevorzugt auf dem Führungsstift (71) axial beweglich gelagert. Der Führungsstift (71) selbst kann in Axialrichtung an dem Gehäuse (60) festgelegt sein. Das Radiallagerungselement (61) erlaubt somit bevorzugt sowohl eine Binnen-Bewegung der Kontaktschwerter in Axialrichtung untereinander, als auch eine Global-Bewegung der Kontaktschwerter insgesamt gegenüber dem Gehäuse (60).

Die Axiallagerungselemente (61) und Radiallagerungselemente (62) können mit beliebiger Anzahl und Anordnung an dem Rotationsschaltkörper (23) vorgesehen sein. Figur 7 zeigt eine besonders bevorzugte Anordnung. Hier sind zwei Axiallagerungselemente (61) vorgesehen. Diese sind auf einer gemeinsamen Symmetrielinie zu beiden Seiten der Drehachse (A) und in räumlicher Nähe zu den Mehrfachanordnungen von Kontaktflächen (28, 29/30, 31) angeordnet. Insbesondere ist genau ein Axiallagerungselement (61) in der Nähe von genau einer Mehrfachanordnung von Kontaktflächen (28, 29/30, 31) und insbesondere in etwa auf einer Mittellinie der jeweiligen Mehrfachanordnung vorgesehen. Die durch das Axiallagerungselement (61) und insbesondere die Federelemente (64, 66) aufgebrachte Vorspannkraft wird somit im Wesentlichen gleichmäßig auf die mehreren Kontaktflächen (28, 29/30, 31) der jeweiligen Mehrfachanordnung verteilt.

In dem gezeigten Beispiel sind ferner vier Radiallagerungselemente (62) vorgesehen, die im Wesentlichen gleichmäßig um die Drehachse (A) verteilt sind und im vorliegenden Beispiel alle Kontaktschwerter (24, 25, 26, 27) durchdringen. Alternativ kann eine andere Anzahl und Anordnung von Radiallagerungselementen vorgesehen sein. Grundsätzlich würde in Radiallagerungselement ausreichen, wobei eine Mitten-Abstützung der Kontaktschwerter (24, 25, 26, 27) an dem Gehäuse (60) erfolgen kann.

Die zuvor beschriebene und in Figuren 6 bis 9 gezeigte Lagerung und Anordnung der Kontaktschwerter (24, 25, 26, 27) mit den mehreren Kontaktflächen (28, 29, 30, 31) hat verschiedene Vorteile. Jeder seitliche Überstand der Kontaktschwerter, der eine Kontaktfläche (28, 29, 30, 31) trägt, weist in einem gewissen Rahmen eine eigene elastische Beweglichkeit auf und ferner weist jede Mehrfachanordnung von Kontaktflächen eine gemeinsame Beweglichkeit auf. Die Vorspannung, die im Wesentlichen über die Federelemente (64, 66) erzeugt wird, kann sich im Wesentlichen gleichmäßig über die Kontaktflächen der zugeordneten Mehrfachanordnung verteilen. Der Rotationskörper (23) und insbesondere die Kontaktschwerter (24, 25, 26, 27) haben bevorzugt eine zur Drehachse (A) rotationssymmetrische Formgebung, wobei weiterhin bevorzugt die Kontaktzungen (51, 52, 53, 54) im Wesentlichen identisch geformt und rotationssymmetrisch zur Drehachse (A) angeordnet sind. Bei einer Schaltdrehung kommen im Wesentlichen simultan eine berührende Kontaktierung im Bereich eines Zuleitungs-Anschlusses (20) sowie eines Ableitungs-Anschlusses (21) zustande.

An jeder der Kontaktflächen (28, 29, 30, 31) und/oder der Kontaktzungen (51, 52, 53, 54) können Anlaufschrägen angeordnet sein, die in Zusammenwirken mit einerseits der axialen Beweglichkeit der Paare von Kontaktschwertern und andererseits der in Axialrichtung wirkenden Vorspannung ein passgenaues Aufgleiten und ein sicheres und vibrationsfreies Kontaktieren begünstigen.

In dem gezeigten Beispiel werden an jeder Kontaktzunge (51, 52, 53, 54) insgesamt vier untereinander redundante elektrische Kontakte zu den Kontaktflächen an einem Paar von Kontaktschwertern gebildet, wobei über jeder Flächenpaarung eine definierte Vorspannkraft wirkt. Hierdurch wird der elektrische Durchgangswiderstand für jede dieser Kontaktzonen minimiert, so dass eine Erwärmung der Kontaktzonen auch bei Anliegen der vollständigen Hauptlast gering ist. Gegebenenfalls kann ein Kontaktfett an den Kontaktzungen (51, 52, 53, 54) sowie den Kontaktflächen (28, 29, 30, 31) aufgebracht werden, das die relative Beweglichkeit und die elektrische Kontaktierung auch über lange Zeiträume begünstigt. Ferner sind die Kontaktflächen und Kontaktzungen bevorzugt mit einer aufgelöteten oder in sonstiger geeigneter Weise befestigten Plattierung aus einem hoch leitfähigen Material versehen, insbesondere mit einer aufgelöteten Silber-Plattierung.

Das Gehäuse (60) des Rotationskörpers (23) ist in den Figuren 6 bis 9 in einer bevorzugten Ausführungsvariante dargestellt. Es ist als mehrteiliges isolierendes Gehäuse ausgebildet und umfasst eine erste Halbschale (73), eine zweite Halbschale (74) und eine Innenhülse (72). Das mindestens eine Kontaktschwert (24, 25, 26, 27) weist einen mittleren Ringabschnitt auf, von dem sich zu zwei gegenüberliegenden Seiten hin die in Radialrichtung überstehenden Kontaktflächen (28, 29, 30, 31) erstrecken. In dem Ringabschnitt befindet sich eine zentrale Ausnehmung, durch die sich bevorzugt das isolierende Gehäuse (60) erstreckt. Die Kontaktschwerter bestehen bevorzugt aus einem hoch leitfähigen Metall, insbesondere aus Kupfer, und sind einstückig ausgebildet.

Gegenüber dem Gehäuse (60) und insbesondere der Innenhülse können die Kontaktschwerter beabstandet sein. Somit wird erreicht, dass ein über die Kontaktschwerter (24, 25, 26, 27) fließender Strom (Hauptlaststrom oder Reststrom) nicht auf eine Welle (11) überfließen kann, die im Zentrum des Rotationsschaltkörpers (23) angeordnet ist. Es können insbesondere nach innen gerichtete Zylinderabschnitte an den Halbschalen (73, 74) vorgesehen sein, die nach innen hin die zentralen Ausnehmungen in den Kontaktschwertern (24, 25, 26, 27) durchgreifen. Weiterhin kann auf diesen Zylinderabschnitten eine zusätzliche im Wesentlichen zylinderringförmige Hülse (72) aufgesetzt sein, die einen Spalt zwischen den Halbschalen (73, 74) überdeckt. Die Lagerung und Formgebung der Kontaktschwerter (24, 25, 26, 27) kann derart gewählt sein, dass ein Luftspalt zwischen der zentralen Ausnehmung und der zylinderförmigen Hülse bzw. den nach innen gerichteten Zylinderabschnitten der Halbschalen (73, 74) verbleibt.

Die Halbschalen (73, 74) können weiterhin die axialen Außenseiten und bereichsweise die radialen Außenseiten der Kontaktschwerter (24, 25, 26, 27) überdecken, insbesondere in den Bereichen, wo sich keine nach außen hin überstehenden Kontaktflächen (28, 29, 30, 31) befinden. Mit anderen Worten hüllt das Gehäuse (60) bevorzugt alle Kontaktschwerter (24, 25, 26, 27) des Rotationsschalterkörpers (23) isolierend ein, mit Ausnahme der in Radialrichtung überstehenden Kontaktflächen (28, 29, 30, 31).

Auch an der radialen Außenseite des Gehäuses (60) kann ein Spalt zwischen den Halbschalen (73, 74) durch ein weiteres isolierendes Element (nicht dargestellt) überdeckt sein.

Die vorgenannten Merkmale des Gehäuseaufbaus erzeugen besonders lange und somit gegen Durchschlag gesicherte Kriechstrecken. Der Gehäuseaufbau gewährleistet somit eine sichere Isolierung der Kontaktschwerter gegenüber der Welle und etwaig einem benachbart angeordneten Rotationsschaltkörper.

Das Gehäuse (60) des Rotationsschaltkörpers (23) umfasst bevorzugt eine (mittensymmetrisch angeordnete) Wellenaufnahme. Über diese Wellenaufnahme ist das Gehäuse (60) mit einer Welle (11) des Restlast-Trennschalters (1) rotationsfest verbindbar. In Axialrichtung kann ggf. eine Verschieblichkeit vorgesehen sein. Für die Ausführung einer Schaltdrehung erfolgt bevorzugt eine Drehmomentleitung von einem externen Betätigungselement her, insbesondere erzeugt durch den Sprungantrieb (40), über die Welle (11) auf das Gehäuse (60) des Rotationsschaltkörpers (23) und weiter über das mindestens eine Radiallagerungselement (62) auf die Kontaktschwerter (24, 25, 26, 27). Die ein oder mehreren Axiallagerungselemente (61) sind an der Drehmomentleitung bevorzugt unbeteiligt.

Der Restlast-Trennschalter gemäß der vorliegenden Offenbarung kann bevorzugt zwei oder mehr Rotationsschaltkörper (23) aufweisen, die insbesondere in der Axialrichtung (A) nebeneinander angeordnet sind. Beispielsweise können bei dem Restlast-Trennschalter (1) in der Ausführung gemäß Figuren 1 bis 4 zwei oder mehr Rotationsschaltkörper (23) in der Isolatorkammer (14) nebeneinander angeordnet werden. Jeder der Rotationsschaltkörper kann gemäß der obigen Erläuterung zwei Paare von Kontaktschwertern oder eine beliebige andere Anzahl von Kontaktschwertern aufweisen, insbesondere ein Paar oder drei Paare.

Eine weitere und besonders bevorzugte Ausführung für eine Mehrfachanordnung ist in Figuren 10 bis 12 gezeigt. Hier umfasst der Restlast-Trennschalter (1) zwei (oder mehr) Modul-Schaltblöcke (12, 13). Diese umfassen wiederum jeweils eine eigene Isolatorkammer (14) mit mindestens einem Zuleitungs-Anschluss (20), einem Rotationsschaltkörper (23) und mindestens einem Ableitungs-Anschluss (21). Mit anderen Worten ist jeder der Modulschaltblöcke (12, 13) eine Schaltvorrichtung (22) gemäß der vorliegenden Offenbarung. Die Mehrzahl von Modul-Schaltblöcken (12, 13) ist mit einer gemeinsamen Zentralwelle (11) (vergleiche Figur 12) oder einer Mehrzahl von gekoppelten Wellen (nicht dargestellt) verbunden bzw. verbindbar.

Die Mehrzahl von Modul-Schaltblöcken (12, 13) ist bevorzugt mit einem gemeinsamen Sprungantrieb (40) verbunden, der insbesondere an einem ersten Ende der Zentralwelle (11) oder einer ersten der gekoppelten Wellen angeschlossen ist. An dem anderen Ende der Zentralwelle (11) oder letzten der gekoppelten Wellen ist bevorzugt das Lagefeststellungsmittel (47) angeordnet, das somit über die Drehstellung der Zentralwelle (11) oder über die gemeinsame Drehstellung der gekoppelten Wellen die gemeinsame Drehlage aller Schaltkörper (23) erfassen kann.

Alternativ können für jeweils ein, zwei oder mehr ModulSchaltblöcke (12, 13) jeweils ein separater Sprungantrieb (40) und/oder ein separates Lagefeststellungsmittel (47) vorgesehen sein.

Der Restlast-Trennschalter (1) weist bevorzugt einen Ausspeisekollektor (19) auf, der mit allen Ableitungs-Anschlüssen (21) der ein oder mehreren Modul-Schaltblöcke (12, 13) bzw. ein oder mehreren Schaltvorrichtungen (22) verbunden ist. Dieser Ausspeisekollektor (19) kann somit als einstückiges Bauteil den Hauptlaststrom oder den Restlaststrom sammeln und auf einen Anschluss (80) zu einem Fahrstrom-Versorgungsleiter (8) übertragen. Der Ausspeisekollektor (19) kann dabei weiterhin in Bezug auf die ein oder mehreren Ableitungs-Anschlüsse (21) als Kühlkörper wirken. Ebenso sind bevorzugt alle Zuleitungs-Anschlüsse (20) der ein oder mehreren Modul-Schaltblöcke (12, 13) mit einer gemeinsamen Einspeiseschiene (18) verbunden, die ebenfalls eine Kühlwirkung hervorrufen kann.

Der Ausspeisekollektor (19) kann weiterhin als mechanische Befestigung dienen, um den Reststrom-Trennschalter (1) an einer externen Struktur festzulegen und kräftemäßig abzustützen. Er kann insbesondere als gemeinsame mechanische Befestigung für eine Mehrzahl von Modul-Schaltblöcken (12, 13) wirken.

Mit anderen Worten ist der Restlast-Trennschalter (1) bevorzugt über den Ausspeisekollektor (19) an einer externen Stützstruktur (8) befestigt bzw. befestigbar. Er kann insbesondere gemäß der Darstellung in Figur 1 mittels des Anschlusses (80) direkt an einer Stromschiene (8) oder direkt an einer Oberleitung (nicht dargestellt) befestigt und gegenüber dieser mechanisch abgestützt sein.

Somit lässt sich der Restlast-Trennschalter (1) gemäß der vorliegenden Offenbarung in direkter Nähe zu dem zu versorgenden Fahrstrom-Versorgungsleiter (8) anordnen, was einerseits sein Auffinden erleichtert und andererseits seine Funktion offensichtlich macht. Infolge der oben beschriebenen redundanten Kontaktzonen und dem hierdurch ermöglichten sehr kompakten Aufbau kann der Restlast-Trennschalter (1) im Wesentlichen ohne eine räumliche Behinderung für den Betrieb des Verkehrsmittels (7) direkt an einem Streckenabschnitt (6) angeordnet werden. Es ist nicht erforderlich, an der Einspeisestelle (9) einen separaten Schaltschrank vorzusehen oder den Restlast-Trennschalter körperlich entfernt von dem Fahrstrom-Versorgungsleiter (8) anzuordnen. Die vorgenannten Aspekte begünstigen, dass auch ortsunkundige Werker in einer Notfallsituation den Restlast-Trennschalter leicht auffinden und korrekt betätigen können. Insbesondere wird bei der Anordnung mehrerer Restlast-Trennschalter (1) für verschiedene Fahrstrom-Versorgungsleiter (8) (beispielsweise in einem Bahnhof) die Zuordnung vereinfacht, sodass das versehentliche Trennen der elektrischen Verbindung zu einem falschen Streckenabschnitt wirksam vermieden wird.

Der Restlast-Trennschalter (1) kann in einer eigenen Schutzeinhausung (81) aufgenommen sein, die in Figuren 4 und 12 umrissartig skizziert ist. Figuren 13 und 14 zeigen eine weitere bevorzugte Ausführung der Schutzeinhausung.

Die Schutzeinhausung (81) kann ein ggfs. abnehmbarer Bestandteil des Restlast-Trennschalters (1) sein und bevorzugt zusätzlich zu der Isolatorkammer (14) vorgesehen sein, beispielsweise um den Restlast-Trennschalter (1) gegenüber dem Eindringen von Staub oder Feuchtigkeit zu kapseln. Die Schutzeinhausung (81) kann insbesondere durch einen Schutzcontainer gebildet sein (vgl. Fig. 13). Bevorzugt erreicht die Schutzeinhausung (81) die Schutzklasse IP65.

Eine besonders bevorzugte Ausführung sieht vor, dass die Schutzeinhausung (81) direkt oder indirekt über den Ausspeisekollektor (19) mechanisch abgestützt ist und zwar über dieselbe externe Stützstruktur, an der der Restlast-Trennschalter (1) fixierbar ist.

In dem Beispiel von Figur 4 ist die Schutzeinhausung (81) an ihrer Unterseite mechanisch stützend mit einer unteren Abdeckung (17) des Restlast-Trennschalters (1) verbunden, die wiederum über die Isolatorkammer (14) mechanisch tragend mit dem Ausspeisekollektor (19) verbunden ist. Eine von außen auf die Schutzeinhausung (81) wirkende Kraft wird somit über die Isolatorkammer (14) auf den Ausspeisekollektor (19) und von dort auf den Anschluss (80) übertragen.

Gemäß einer in Figur 13 und 14 gezeigten Ausführung kann der Restlast-Trennschalter (1) eine Gewichtsausgleich-Halterung (94) aufweisen. Diese kann insbesondere in der Form eines Stückfußes oder eines Stützauslegers gebildet sein. Durch das Gewicht des Restlast-Trennschalters (1) kann sich etwaig eine unzulässige Verformung des Fahrstrom-Versorgungsleiters (8) ergeben, an dem der Restlast-Trennschalter (1) befestigt ist. Andererseits sind durch Temperaturänderungen und etwaig mechanische Einflüsse aus dem Betrieb des Verkehrsmittels weitere Verformungen des Versorgungsleiters (8) möglich.

Die Gewichtsausgleich-Halterung (94) ist bevorzugt dazu ausgebildet, eine elastische Verformung des Fahrstrom-Versorgungsleiters (8) zuzulassen und eine begrenzte Beweglichkeit bzw. eine begrenzte Mitbewegung des Reststrom-Trennschalters (1) und/oder der Schutzeinhausung bzw. des Schutzcontainers (81) zuzulassen. Die Gewichtsausgleich-Halterung (94) umfasst bevorzugt ein elastisches Stützmittel, bspw. in Form einer Feder. Das Stützmittel ist vorspannbar. Es kann so weit vorgespannt werden, dass durch die Rückstellkraft des Stützmittels die Gewichtskraft des Restlast-Trennschalters (1) und/oder des Schutzcontainers (81) überwiegend oder vollständig ausgeglichen wird. Das Stützmittel kann weiterhin elastisch ausweichfähig sein, um ein Anheben oder Absenken des Restlast-Trennschalters (1) und/oder des Schutzcontainers (81) infolge externer Krafteinwirkungen zuzulassen. Andererseits weist das Stützmittel bevorzugt eine mindestens einachsige, bevorzugt eine zweiachsige Querbeweglichkeit auf, sodass auch eine horizontale Ausweichbewegung des Restlast-Trennschalters (1) und/oder des Schutzcontainers (81) ermöglicht ist.

Der Ausspeisekollektor (19) durchdringt die Schutzeinhausung bzw. den Schutzcontainer (81) bevorzugt unter Bildung einer Dichtstelle, die insbesondere gegen das Eindringen von Staub und Strahlwasser abdichtet (vgl. Figur 4). Besonders bevorzugt weist der Ausspeisekollektor (19) einen im Wesentlichen ringförmig verlaufenden Dichtungssitz (82) auf und ist über ein umlaufendes Dichtungsmittel (83) mit der Schutzeinhausung (81) verbunden. Auf diese Weise kann wirksam das Eindringen von Staub und Wasser bzw. Feuchtigkeit vermieden werden. Insbesondere werden bei Verwendung eines einstückig ausgebildeten Ausspeisekollektors (19) keine Nahtstellen im Bereich des Dichtungssitzes (82) erzeugt, was für eine dauerhafte Abdichtung vorteilhaft ist.

Die Schutzeinhausung (81) kann bevorzugt aufklappbar sein, beispielsweise gemäß der in Figur 4 dargestellten Teilungsebene (88), die im Wesentlichen schräg zur Horizontalebene verläuft. Über ein beispielhaft dargestelltes Scharnier (89) kann ein oberer Teil der Schutzeinhausung (81) weggeklappt werden, um einen manuellen Zugriff zu dem Handantrieb (46) und zu oben am Restlast-Trennschalter (1) angeordneten Handgriffen (85) zu ermöglichen. Im aufgeklappten Zustand kann somit der Restlast-Trennschalter (1) direkt gegriffen werden, um ihn beispielsweise mit einem vormontierten Anschluss (80) an einem Fahrstrom-Versorgungsleiter (8) zu positionieren und zu fixieren.

Der Restlast-Trennschalter (1) kann somit gemeinsam mit der Schutzeinhausung (81) montiert werden, wobei lediglich die Fixierstellen am Anschluss (80) zu dem Fahrstrom-Versorgungsleiter (8) sowie etwaig an der Einspeiseschiene (18) zu einer Zuführleitung (4) zu befestigen sind. Die Montage und/oder der Austausch können somit besonders schnell und einfach erfolgen. Infolge der festen Kombination von Restlast-Trennschalter (1) und Schutzeinhausung (81) ist ferner sichergestellt, dass der flüssigkeits- und staubdichte Verbund gemäß der vorgeschriebenen Schutzklasse nach der Montage erfüllt ist. Die Dichtstelle zwischen dem Dichtungsmittel (83) und dem Dichtungssitz (82) muss zur Montage oder Demontage des Restlast-Trennschalters (1) nicht angetastet werden.

Der Ausspeisekollektor (19) ist bevorzugt aus einem Leichtmetall gefertigt, insbesondere aus Aluminium. Er weist bevorzugt eine elektrisch hoch leitfähige Beschichtung auf, insbesondere eine Silberbeschichtung, bzw. eine Versilberung. Die Beschichtung kann allseitig aufgebracht sein.

Die vorgenannte Materialwahl führt zu verschiedenen Vorteilen. Einerseits wird das Gesamtgewicht des Restlast-Trennschalters (1) reduziert, sodass er von nur einem Werker gehandhabt und montiert werden kann. Andererseits führt Aluminium die etwaig an den Kontaktstellen im Inneren des Restlast-Trennschalters (1) entstehende Wärme besonders gut nach außen hin ab, sodass die Wärme insbesondere über den Anschluss (80) in den Fahrstrom-Versorgungsleiter (8) abgeführt werden kann. Durch die Versilberung wird eine besonders hohe Leitfähigkeit erreicht, die auch bei ungünstigen Umgebungsbedingungen aufrecht erhalten bleibt.

Der Restlast-Trennschalter (1) kann bevorzugt ein Zugriffsbeschränkungsmittel aufweisen, das einen manuellen Zugriff zu dem Restlast-Trennschalter (1) nur ermöglicht, wenn eine erkannte elektrische Last, insbesondere die erkannte Last zwischen dem Zuleitungs-Anschluss (20) und dem Ableitungs-Anschluss (21) einen Zulässigkeits-Grenzwert unterschreitet und/oder wenn erkannt wird, dass ein vorgelagerter Hauptlast-Trennschalter (3) geöffnet ist. Das Zugriffsbeschränkungsmittel kann beispielsweise ein Schloss- oder Verriegelungsmechanismus sein, insbesondere ein steuerbares Schloss (98). Es kann mit dem oben beschriebenen Lasterkennungsmittel und/oder dem oben beschriebenen Auslösemittel (44) zusammenwirken. Durch das Zugriffsbeschränkungsmittel wird bevorzugt erreicht, dass ein manueller Zugriff zu dem Restlast-Trennschalter (1) nur möglich ist, wenn keine Hauptlast an der Einspeisestelle (9) bzw. über dem Restlast-Trennschalter (1) anliegt, sondern allenfalls die definierte Restlast, bevorzugt nur eine momentane Last die geringer ist als ein Kleinspannungs-Grenzwert.

Der Restlast-Trennschalter kann eine FernsteuerungsSchnittstelle aufweisen, die bevorzugt eine ferngesteuerte Aktivierung des Antriebsmotors (45) und/oder des Auslösemittels (44) ermöglicht. Die Fernsteuerungsschnittstelle kann beliebig ausgebildet sein.

Alternativ oder zusätzlich weist der Restlast-Trennschalter (1) bevorzugt eine Fernüberwachungsschnittstelle auf, die insbesondere dazu ausgebildet ist, einen Schaltzustand bzw. eine Drehlage des Restlast-Trennschalters (1) bzw. des Rotationsschaltkontakts (23) zu übermitteln.

Gemäß einer bevorzugten Ausführungsvariante können das Lasterkennungsmittel, und/oder das Auslösemittel (44) und/oder das Zugriffsbeschränkungsmittel und/oder die Fernsteuerungs-Schnittstelle und/oder die Fernüberwachungs-Schnittstelle in einem gemeinsamen Steuermittel integriert sein, insbesondere in einer Datenverarbeitungseinrichtung (97). Das Steuermittel weist bevorzugt eine separate Energieversorgung auf, insbesondere einen Akkumulator oder eine Batterie. Es kann zusätzlich über die Zuführleitung (4) bzw. Hauptlast-Energieversorgung betrieben sein. Das Steuermittel und/oder eine der beinhalteten Einrichtungen können eine Kommunikationsschnittstelle (92, 97) zur drahtgebundenen oder drahtlosen Kommunikation aufweisen, beispielsweise einen Netzwerkanschluss oder ein Datenmodem.

Figuren 13 und 14 zeigen eine weitere bevorzugte Ausführung eines Restlast-Trennschalters (1), der hier über eine Schutzeinhausung in Form eines Schutzcontainers (81) verfügt. Der Restlast-Trennschalter umfasst in der gezeigten Form (genau) einen Modul-Schaltblock (12), an oder in dem eine Isolatorkammer (14) und zwei Rotationsschaltkörper (23) angeordnet sind. Die Rotationsschaltkörper sind nebeneinander auf einer gemeinsamen Welle angeordnet, die weiterhin mit dem Sprungantrieb (40) verbunden ist. Im Übrigen entspricht die Ausbildung der oben erläuterten und in Figuren 10 bis 12 gezeigten Variante. Der Modul-Schaltblock (12) ist im Vergleich zu Figuren 10 bis 12 um die Längsachse (A) gekippt, sodass die Zuleitungs-Anschlüsse (21) in Horizontalrichtung unterhalb und die Ableitungs-Anschlüsse (22) in Horizontalrichtung oberhalb der Rotationsschaltkörper (23) angeordnet sind. Alternativ ist eine um die Horizontalachse gewendete Anordnung möglich.

Der Restlast-Trennschalter (1) gemäß Figuren 13 und 14 umfasst einen im Wesentlichen zweiteiligen Schutzcontainer (81). Der untere Teil des Schutzcontainers (81) ist wannenförmig ausgebildet. In Figur 13 ist seine Vorderwandung ausgeblendet. Im unteren Teil sind der Modul-Schaltblock (12), der Sprungantrieb (40) sowie weitere Steuer- und Feststellungsmittel aufgenommen sind. Die Steuer- und Feststellungsmittel umfassen mindestens eine und bevorzugt mehrere der nachfolgend genannten Komponenten:
- Ein Lagefeststellungsmittel (47)
- eine Lasterkennung, hier umfassend einen Spannungswächter (92);
- einen Elektromotor (45);
- einen Transformator oder eine sonstige geeignete Stromversorgung für den Elektromotor (45);
- eine Datenverarbeitungseinrichtung (97);
- eine drahtlose Kommunikationsschnittstelle.

Am unteren Teil, insbesondere im Bereich der Vorderwandung, können ein oder mehrere Sichtfenster (95) vorgesehen sein, um einen Blick auf die Schaltvorrichtung (22) und insbesondere den oder die Rotationsschaltkörper (23) zu ermöglichen. Durch das Sichtfenster (95) kann eine momentane Schaltposition der Rotationsschaltkörper visuell ablesbar sein. Bevorzugt ist die Schaltposition zusätzlich durch das Lagefeststellungsmittel (47) erfassbar, welches sich in der Darstellung von Figur 13 hinter der Schaltvorrichtung (22) befindet.

Die Datenverarbeitungseinrichtung (97) kann eine beliebige Ausbildung haben. Sie kann insbesondere als ein Universal-Computer oder als ein programmierbares Steuergerät ausgebildet sein. Besonders bevorzugt umfasst die Datenverarbeitungseinrichtung (97) eine drahtlose Kommunikationsschnittstelle, die bspw. über WLAN, UMTS, GPS, LTE oder einen sonstigen drahtlosen Kommunikationsstandard Nachrichten mit externen Kommunikationsteilnehmern austauscht. Ein solcher externen Kommunikationsteilnehmer kann insbesondere

Der obere Teil des Schutzcontainers (81) ist als Deckel (90) ausgebildet. Er kann gemäß den obigen Erläuterungen aufklappbar sein. Der Deckel kann im geschlossenen Zustand verriegelbar sein, insbesondere durch ein steuerbares Schloss (98) gemäß den obigen Erläuterungen.

An mindestens einer Seite des Deckels (90) kann ein Überhang angeformt sein, der über den unteren Teil des Schutzcontainers (81) hinaussteht und eine Anschlussabdeckung (91) für die Einspeiseschiene (18) und dort befestigte Konnektoren einer Zuführleitung (4) bildet. Die Einspeiseschiene (18) ist in dem Beispiel von Figuren 13 und 14 seitlich aus dem unteren Teil des Schutzcontainers (81) herausgeführt. Die Durchführung ist bevorzugt mit einer Dichtung versehen, um das Eindringen von Feuchtigkeit oder Wasser in den Schutzcontainer (81) zu verhindern.

An dem Schutzcontainer (81), insbesondere an dessen Seitenwandung, kann eine drahtgebundene Kommunikationsschnittstelle (92) vorgesehen sein. Die drahtgebundene Kommunikationsschnittstelle kann alternativ oder zusätzlich zu einer drahtlosen Kommunikationsschnittstelle vorhanden sein. Im Beispiel von Figur 13 und 14 ist die drahtlose Kommunikationsschnittstelle mit einer Schnittstelle für die Zuführung eines Allgemeinstroms kombiniert. Der Allgemeinstrom kann zugeführt werden, um damit den Elektromotor (45) und etwaig eines oder mehrere der oben genannten Steuer- und Feststellungsmittel zu betreiben. Alternativ oder zusätzlich können ein oder mehrere der oben genannten Steuer- und Feststellungsmittel durch einen Strom betrieben werden, der über die Zuführleitung (4) geführt ist.

Der Restlast-Trennschalter (1) kann einen Energiespeicher (Akku) umfassen, der bei einem Ausfall der Allgemeinstrom-Versorgung und/oder der Fahrstrom-Versorgung für eine Überbrückungszeit ein oder mehrere des o.g. Steuer- und Feststellungsmittel versorgt. Der Restlast-Trennschalter (1) kann entsprechend ein oder mehrere Ladegeräte oder sonst geeignete Ladevorrichtung aufweisen, um den Energiespeicher aus dem Fahrstrom oder dem Allgemeinstrom aufzuladen.

Die Speicherkapazität des Energiespeichers ist bevorzugt derart ausgelegt, dass der Energiespeicher bei voller Ladung mindestens zwei, bevorzugt mindestens sechs oder 10 Schaltvorgänge des Restlast-Trennschalters sowie einen Fernüberwachungs- und/oder Fernsteuerungsbetrieb für mindestens 24 Stunden, bevorzugt mindestens 72 Stunden oder mindestens 5 Tage unterstützt.

Auf der Datenverarbeitungseinrichtung (97) kann ein Softwareprodukt installiert oder ausgeführt sein, das Anweisungen zur Durchführung eines Betriebsverfahrens gemäß der vorliegenden Offenbarung umfasst. Das Softwareprodukt kann auf einem physischen Datenspeicher vorliegen. Das Softwareprodukt kann auch außerhalb der Datenverarbeitungsvorrichtung vorliegen oder gespeichert sein, insbesondere auf einem externen Server, von dem es zeitweise oder dauerhaft auf die Datenverarbeitungseinrichtung übertragbar ist.

Eine bevorzugte Ausführung des Reststrom-Trennschalters (1) sieht vor, dass ein Zugriff auf den Reststrom-Trennschalter (1) und insbesondere dessen Steuer- oder Feststellungsmittel nur nach einer erfolgreichen Authentifizierung ermöglicht ist. Der Restlast-Trennschalter kann hierfür ein beliebiges Authentifizerungs-Prüfungsmittel aufweisen, das insbesondere in Form einer Software-Komponente und/oder in Form einer Hardware-Komponente ausgebildet sein kann. Für einen Zugriff auf den Reststrom-Trennschalter (1) kann beispielsweise eine Authentifizierungs-Anfrage über eine der Kommunikationsschnittstellen (92, 97) empfangen werden. Diese Anfrage kann von einer entfernten Steuerzentrale oder von einem mitgeführten Mobilgerät eines Werkers gesendet werden. Wenn die Authentifizierungs-Anfrage durch das Authentifizierungs-Prüfungsmittel bestätigt wird, können jeweils ein Fernüberwachungs-Zugriff und/oder ein Fernsteuerungs-Zugriff und/oder ein manueller Zugriff freigegeben werden.

Im Falle einer Fernüberwachungs-Freigabe können ein oder mehrere Statusmeldungen über den Restlast-Trennschalter (1) und/oder dessen Steuer- und Feststellungsmittel übertragen werden, darunter insbesondere eine ermittelte Schaltposition des mindestens einen Rotationsschaltkörpers (23), eine momentan anliegende Last und/oder ein Ladezustand des Sprungantriebs und/oder des Energiespeichers. Weiterhin können ein oder mehrere Alarmzustände übermittelt werden, insbesondere ob festgestellt wurde, dass sich ein Rotationsschaltkörper (23) in einer Zwischenlage befindet.

Im Falle einer Fernsteuerungs-Freigabe kann eine Anforderung zur Trennung (oder Herstellung) der elektrischen Verbindung an dem Restlast-Trennschalter (1) gemäß dem erläuterten Betriebsverfahren verarbeitet werden.

Wenn eine Freigabe für den manuellen Zugriff erfolgt, kann das steuerbare Schloss (98) betätigt werden, um ein Öffnen des Schutzcontainers (81) zu ermöglichen. Das steuerbare Schloss (98) kann zusätzlich die Zuführung oder Einführung eines physischen Entsperrmittels, insbesondere eines Schlüssels erfordern, um den Deckel (90) zu öffnen.

Wenn das Authentifizierungs-Prüfmittel eine Authentifizierungs-Anfrage teilweise oder vollständig zurückweist, können entsprechend eine oder mehrere der vorgenannten Freigaben verweigert werden, sodass entsprechend eine Anforderung zur Trennung (oder Herstellung) der elektrischen Verbindung an dem Restlast-Trennschalter (1) unberücksichtigt bleibt, und/oder keine Statusmeldungen über den Restlast-Trennschalter (1) übermittelt werden, und/oder ein manueller Zugriff auf den Restlast-Trennschalter (1) und insbesondere ein Öffnen des Schutzcontainers (81) verhindert wird.

Der Restlast-Trennschalter (1) kann weiterhin eine Warnmeldung erzeugen und versenden, wenn trotz einer zurückgewiesenen Authentifizierungs-Anfrage festgestellt wird, dass die Schutzeinhausung (81) geöffnet wird und/oder dass sich der Schaltzustand des Restlast-Trennschalters (1) ändert.

Der Restlast-Trennschalter (1) kann einen Überspannungs-Schutz (99) aufweisen, der insbesondere innerhalb der Schutzeinhausung (81) einfach oder mehrfach angeordnet ist. Der Überspannungs-Schutz (99) ist bevorzugt in einer elektrischen Verbindung zwischen der Zuführleitung (4) und dem Zuleitungs-Anschluss (20) des Restlast-Trennschalters (1) angeordnet.

Der Empfang und das Versenden von Datennachrichten kann auf beliebige Weise unter Nutzung einer drahtgebundenen und/oder einer drahtlosen Kommunikationsschnittstelle (92, 97) erfolgen. Die Datennachrichten können insbesondere eine Anfrage für das Trennen oder das Herstellen der elektrischen Verbindung, eine Trenn-Bestätigung oder Einschalt-Bestätigung, eine oder mehrere Statusmitteilungen sowie Authentifizierungs-Anfragen und Authentifizierungs-Bestätigungen umfassen.

Gemäß einer bevorzugten Ausführung können Signale zum Senden oder Empfangen von Datennachrichten auf eine Laststromleitung aufmoduliert werden, die mit dem Restlast-Trennschalter verbunden ist. Die Laststromleitung kann insbesondere die Zuführleitung (4) für den Fahrstrom oder eine Leitung für den Allgemeinstrom sein. Durch das Aufmodulieren eines Signals zum Austausch von Datennachrichten kann insbesondere erreicht werden, dass keine zusätzlichen Kommunikationsleitungen verlegt werden müssen.

Wenn der Restlast-Trennschalter für den Betrieb einer Oberleitung verwendet wird, kann es besonders vorteilhaft sein, eine drahtlose Kommunikationsschnittstelle zu verwenden.

Abwandlungen der offenbarten Erfindung sind in verschiedener Weise möglich. Insbesondere können die zu den verschiedenen Ausführungsvarianten gezeigten oder beschriebenen Merkmale in beliebiger Weise miteinander kombiniert oder vertauscht werden.

Der Restlast-Trennschalter (1) gemäß der Ausführung in Figuren 1 bis 4 kann zur Leitung einer Hauptlast von bis zu 4.000 Ampere und/oder zur Trennung einer Restlast von bis zu 900 Ampere ausgebildet sein. Der Restlast-Trennschalter (1) gemäß der Ausführung in Figuren 10 bis 12 kann zur Leitung einer Hauptlast von bis zu 8.000 Ampere und/oder zur Trennung einer Restlast von bis zu 1.800 Ampere ausgebildet sein. Durch die Hinzunahme weiterer Rotationsschaltkörper (23) und/oder Modul-Schaltblöcke (12, 13) sind die maximal zulässigen Grenzwerte für die Hauptlast und die Restlast entsprechend veränderbar.

Der Rotationsschaltkörper (23) mit dem Gehäuseaufbau (60) gemäß Figuren 6 bis 9 kann auch mit einer geringeren Anzahl von Kontaktschwertern (24, 25, 26, 27) ausgestattet sein, insbesondere mit nur einem Paar von Kontaktschwertern.

Das Zusammenwirken und das Lagerungskonzept für die Kontaktzungen und die Kontaktschwerter können invertiert werden, sodass an einem Kontaktschwert jeweils eine erste und eine zweite Kontaktzunge vorgesehen werden, während an einem Zuleitungs-Anschluss (20) und/oder an einem Ableitungs-Anschluss (21) ein Paar von vorgespannten Kontaktkörpern vorgesehen wird, die die Kontaktflächen tragen, insbesondere eine Mehrfachanordnung von Kontaktflächen. In diesem Fall können die Kontaktkörper eine Binnen-Beweglichkeit in Axialrichtung aufweisen, während die Axiallage der Kontaktschwerter festgelegt sein kann.

### BEZUGSZEICHENLISTE

- 1: Restlast-Trennschalter
- 2: Spannungsquelle
- 3: Hauptlast-Schalter
- 4: Zuführleitung
- 5: Restkapazität
- 6: Streckenabschnitt
- 7: Verkehrsmittel, elektrisch betrieben / Zug / Oberleitungsbus
- 8: Fahrstrom-Versorgungsleiter / Stromschiene / Oberleitung
- 9: Einspeisestelle
- 10: Stromabgreifer / Gleitkontakt
- 11: Welle / Zentralwelle
- 12: Erster Modul-Schaltblock
- 13: Zweiter Modul-Schaltblock
- 14: Isolatorkammer
- 15: erste Seitenwand
- 16: zweite Seitenwand
- 17: Abdeckung
- 18: Einspeiseschiene
- 19: Ausspeisekollektor
- 20: Zuleitungs-Anschluss
- 21: Ableitungs-Anschluss
- 22: Schaltvorrichtung
- 23: Rotationsschaltkörper
- 24: Kontaktschwert
- 25: Kontaktschwert
- 26: Kontaktschwert
- 27: Kontaktschwert
- 28: Kontaktfläche
- 29: Kontaktfläche
- 30: Kontaktfläche
- 31: Kontaktfläche
- 32: Löschkammer
- 33: Löschkammer
- 34: Löschbleche
- 35: Durchtrittsöffnung
- 36: Käfigträger
- 37: Grenzfläche
- 40: Sprungantrieb
- 41: Abtriebsflansch
- 42: Kraftspeicher
- 43: Antriebsflansch
- 44: Auslösemittel
- 45: Antriebsmotor
- 46: Handantrieb
- 47: Lagefeststellungsmittel
- 51: Kontaktzunge
- 52: Kontaktzunge
- 53: Kontaktzunge
- 54: Kontaktzunge
- 55: Materialausnehmung / Einschnitt
- 56: Materialausnehmung / Einschnitt
- 60: Gehäuse
- 61: Axiallagerungselement
- 62: Radiallagerungselement
- 63: Tragbolzen
- 64: Federelement / Tellerfeder / Tellerfederpaket
- 65: Abstandhalter / Distanzhülse
- 66: Federelement / Tellerfeder / Tellerfederpaket
- 67: Befestigungsmittel / Schraube
- 68: Befestigungsmittel / Überstand
- 69: erste gespannte Lagerungs-Anordnung
- 70: zweite gespannte Lagerungs-Anordnung
- 71: Führungsstift
- 72: Innenhülse
- 73: Erste Halbschale
- 74: Zweite Halbschale
- 75: Wellenaufnahme
- 80: Anschluss für Fahrstrom-Versorgungsleiter / Schienenanschluss
- 81: Schutzeinhausung / Schutzcontainer
- 82: Dichtungssitz
- 83: Dichtungsmittel
- 84: Betätigungsinstrument zur manuellen Betätigung / Ratschenhebel / Hebel / Kurbel /
- 85: Handgriff
- 86: Entlüftung
- 88: Teilungsebene
- 89: Scharnier
- 90: Deckel
- 91: Überhang / Anschlussabdeckung
- 92: Kommunikationsschnittstelle, drahtgebunden
- 93: Spannungswächter
- 94: Gewichtsausgleich-Halterung
- 95: Sichtfenster
- 96: Transformator / Motor-Stromversorgung
- 97: Datenverarbeitungseinrichtung / Steuermittel / Kommunikationsschnittstelle, drahtlos
- 98: Steuerbares Schloss
- 99: Überspannungs-Schutz
- A: Achse / Mittelachse
- US: Überwachungsstation
- IR: Reststrom
- IL: Hauptlast-Strom
- S1: Geschlossen-Drehstellung
- S2: Offen-Drehstellung
- X1: Erste Bewegungsbahn
- X2: Zweite Bewegungsbahn

## Patentansprüche

1. Restlast-Trennschalter zur Trennung einer elektrischen Verbindung zu einem Fahrstrom-Versorgungsleiter (8) für ein Verkehrsmittel (7), wobei der Restlast-Trennschalter (1) einen Zuleitungs-Anschluss (20), einen Ableitungs-Anschluss (21) und mindestens eine Schaltvorrichtung (22) umfasst, wobei
- der Restlast-Trennschalter (1)
∘ im Geschlossen-Zustand einen Fahrstrom für das Verkehrsmittel (7) als Hauptlast durchleitet, UND
∘ im Offen-Zustand verhindert, dass ein Strom und insbesondere die Hauptlast übertragen wird,
- die Schaltvorrichtung (22) einen Rotationsschaltkörper (23) mit mindestens einem Kontaktschwert (24, 25, 26, 27) aufweist, wobei
- das mindestens eine Kontaktschwert (24, 25, 26, 27) um eine zwischen dem Zuleitungs-Anschluss (20) und dem Ableitungs-Anschluss (21) angeordnete Achse (A) drehbar ist und endseitige in Radialrichtung überstehende Kontaktflächen (28, 29, 30, 31) aufweist, und wobei
- die Kontaktflächen (28, 29, 30, 31) in einer Geschlossen-Drehstellung (S1) des Rotationsschaltkörpers (23) einerseits mit dem Zuleitungs-Anschluss (20) und andererseits mit dem Ableitungs-Anschluss (21) in berührendem Kontakt stehen und in einer Offen-Drehstellung (S2) des Rotationsschaltkörpers (23) jeweils zu dem Zuleitungs-Anschluss (20) und dem Ableitungs-Anschluss (21) beabstandet sind, und wobei
- der Restlast-Trennschalter (1) eine einseitig beschränkte Drehrichtung zur Ausführung der Schaltbewegungen aufweist und unidirektional und zyklisch betätigbar ist, um den Rotationsschaltkörper (23) insbesondere iterativ von einer Geschlossen-Drehstellung (S1) in eine Offen-Drehstellung (S2) und wieder in eine Geschlossen-Drehstellung (S1) usw. zu bewegen,
**dadurch gekennzeichnet, dass**
- der Restlast-Trennschalter dafür vorgesehen und ausgebildet ist, eine elektrische Verbindung zu dem Fahrstrom-Versorgungsleiter (8) zu trennen und zwar im stromlosen Zustand ODER wenn maximal eine vordefinierte Restlast anliegt, die nach der Abschaltung der Hauptlast vorliegt; und dass
- der Restlast-Trennschalter einen Sprungantrieb (40) aufweist, der dazu ausgebildet ist, den Rotationsschaltkörper (23) zu einer sprungartigen Schaltdrehung zu veranlassen.

2. Restlast-Trennschalter nach Anspruch 1, wobei die vollständige Drehbewegung zwischen einer Geschlossen-Drehstellung (S1) und einer Offen-Drehstellung (S2) in weniger als 200 Millisekunden stattfindet.

3. Restlast-Trennschalter nach einem der vorhergehenden Ansprüche, wobei der Restlast-Trennschalter (1) und insbesondere der Sprungantrieb (40) ein Auslösemittel (44) zur Auslösung einer sprungartigen Schaltdrehung aufweist, und wobei
- das Auslösemittel (44) dazu ausgebildet ist, die sprungartige Schaltdrehung zu unterbinden, wenn ein Kraftspeicher (42) des Sprungantriebs (40) eine unzureichende Ladung oder Vorspannung aufweist UND/ODER wobei
- der Restlast-Trennschalter eine Lasterkennung aufweist, die einen Stromfluss und/oder eine Spannung zwischen dem Zuleitungs-Anschluss (20) und dem Ableitungs-Anschluss (21) überwacht und der Restlast-Trennschalter (1) und insbesondere das Auslösemittel (44) dazu ausgebildet ist, eine Schaltbewegung des Rotationsschaltkörpers (23) zu unterbinden, wenn eine erkannte elektrische Last zwischen dem Zuleitungs-Anschluss (20) und dem Ableitungs-Anschluss (21) einen Zulässigkeits-Grenzwert überschreitet.

4. Restlast-Trennschalter nach einem der vorhergehenden Ansprüche, wobei der Restlast-Trennschalter (1) ein Lagefeststellungsmittel (47) aufweist, das eine Drehlage des Rotationsschaltkörpers (23) bzw. das Vorliegen einer Geschlossen-Drehstellung (S1) oder einer Offen-Drehstellung (S2) erfasst.

5. Restlast-Trennschalter nach einem der vorhergehenden Ansprüche, wobei der Rotationsschaltkörper (23) ein einteiliges oder mehrteiliges isolierendes Gehäuse (60) aufweist, das insbesondere eine erste Halbschale (73), eine zweite Halbschale (74) und eine Innenhülse (72) aufweist, und wobei das mindestens eine Kontaktschwert (24, 25, 26, 27) eine zentrale Ausnehmung aufweist, durch die sich das Gehäuse (60) erstreckt.

6. Restlast-Trennschalter nach einem der vorhergehenden Ansprüche, wobei der Restlast-Trennschalter (1)
- eine Mehrzahl von Rotationsschaltkörpern (23) aufweist, die insbesondere in der Axialrichtung (A) nebeneinander angeordnet sind, UND/ODER
- zwei oder mehr Modul-Schaltblöcke (12, 13) umfasst, die insbesondere jeweils eine Isolatorkammer (14) mit mindestens einem Zuleitungs-Anschluss (20), mindestens oder genau einem Rotationsschaltkörper (23) und mindestens einem Ableitungs-Anschluss (21) umfassen.

7. Restlast-Trennschalter nach einem der vorhergehenden Ansprüche, wobei der Restlast-Trennschalter (1) in einer Schutzeinhausung (81), insbesondere einem Schutzcontainer, aufgenommen ist und die Schutzeinhausung (81) eine Zugriffsbeschränkung aufweist, die einen manuellen Zugriff zu dem Restlast-Trennschalter nur ermöglicht, wenn eine erkannte elektrische Last zwischen dem Zuleitungs-Anschluss (20) und dem Ableitungs-Anschluss (21) einen Zulässigkeits-Grenzwert unterschreitet.

8. Restlast-Trennschalter nach einem der vorhergehenden Ansprüche, wobei der Restlast-Trennschalter
- eine Fernsteuerungs-Schnittstelle aufweist, UND/ODER
- eine Fernüberwachungs-Schnittstelle aufweist, die insbesondere dazu ausgebildet ist, einen Schaltzustand (S1, S2) des Restlast-Trennschalters (1) zu übermitteln.

9. Betriebsverfahren für einen Restlast-Trennschalter (1), wobei der Restlast-Trennschalter (1) nach einem der vorhergehenden Ansprüche 1 bis 8 ausgebildet ist und einen rotatorischen Sprungantrieb (40) aufweist, der dazu ausgebildet ist, einen Rotationsschaltkörper (23) des Restlast-Trennschalters (1) zu einer sprungartigen Schaltdrehung zu veranlassen, **dadurch gekennzeichnet, dass** der Restlast-Trennschalter (1) eine Lasterkennung aufweist, die einen Stromfluss und/oder eine Spannung zwischen dem Zuleitungs-Anschluss (20) und dem Ableitungs-Anschluss (21) des Restlast-Trennschalters (1) überwacht, und wobei das Betriebsverfahren die folgenden Schritte umfasst:
- Empfangen einer Anforderung zur Trennung der elektrischen Verbindung am Restlast-Trennschalter (1);
- Überprüfen einer Last, die an dem Restlast-Trennschalter zwischen dem Zuleitungs-Anschluss (20) und dem Ableitungs-Anschluss (21) anliegt;
- Wenn festgestellt wird, dass die Last, die die an dem Restlast-Trennschalter zwischen dem Zuleitungs-Anschluss (20) und dem Ableitungs-Anschluss (21) anliegt, kleiner ist als eine zulässige Restlast: Auslösen der sprunghaften Drehbewegung des Rotations-Schaltkörpers.

10. Betriebsverfahren nach dem vorhergehenden Anspruch, wobei der Restlast-Trennschalter (1) einen Motor (45) aufweist, um den Sprungantrieb (40) oder einen darin enthaltenen Kraftspeicher (42) zu laden, und wobei der Motor (45) nur unter der Bedingung betrieben wird, dass festgetellt wurde, dass die Last, die an dem Restlast-Trennschalter zwischen dem Zuleitungs-Anschluss (20) und dem Ableitungs-Anschluss (21) anliegt, kleiner ist als die zulässige Restlast.

11. Betriebsverfahren nach einem der Ansprüche 9 bis 10, wobei der Restlast-Trennschalter (1) ein Lagefeststellungsmittel (47) aufweist, das dazu ausgebildet ist, die Drehlage des mind. einen Rotationsschaltkörpers (23) zu erfassen, insbesondere das Vorliegen einer Geschlossen-Drehstellung (S1) oder einer Offen-Drehstellung (S2), und wobei die Drehlage des Rotationsschaltkörpers (23) und/oder das Vorliegen einer Geschlossen-Drehstellung (S1) oder einer Offen-Drehstellung (S2) als Statusbenachrichtigung über eine Kommunikationsschnittstelle versendet wird.

## Claims

1. Residual load disconnector switch for disconnecting an electrical connection to a propulsion current supply conductor (8) for a transportation means (7), wherein the residual load disconnector switch (1) comprises a feed line terminal (20), a discharge line terminal (21) and at least one switching device (22), wherein
- The residual load disconnector (1)
∘ in the closed state, transmits a propulsion current for the transportation means (7) as the main load, AND
∘ in the open state prevents a current and in particular the main load from being transmitted,
- the switching device (22) has a rotary switch body (23) with at least one contact blade (24, 25, 26, 27), wherein
- the at least one contact blade (24, 25, 26, 27) is rotatable about an axis (A) arranged between the feed line terminal (20) and the discharge line terminal (21) and has end contact surfaces (28, 29, 30, 31) projecting in the radial direction, and wherein
- the contact surfaces (28, 29, 30, 31) are in contact with the feed line terminal (20) on the one hand and with the discharge line terminal (21) on the other hand in a closed rotary position (S1) of the rotary switch body (23) and are spaced apart from the feed line terminal (20) and the discharge line terminal (21) in an open rotary position (S2) of the rotary switch body (23), and
- the residual load disconnector switch (1) has a unidirectionally limited direction of rotation for executing the switching movements and can be actuated unidirectionally and cyclically in order to move the rotary switch body (23), in particular iteratively, from a closed rotary position (S1) into an open rotary position (S2) and back into a closed rotary position (S1), and so on,
**characterized in that**
- the residual load disconnector switch is provided and designed to disconnect an electrical connection to the propulsion current supply conductor (8) in the de-energized state OR when a maximum predefined residual load is present which is present after the main load has been switched off; and **in that**
- the residual load disconnector switch has a jump drive (40) which is designed to cause the rotary switch body (23) to make a jump-like switching rotation.

2. Residual load disconnector switch according to claim 1, wherein the complete rotary movement between a closed rotary position (S1) and an open rotary position (S2) takes place in less than 200 milliseconds.

3. Residual load disconnector switch according to one of the preceding claims, wherein the residual load disconnector switch (1) and in particular the jump drive (40) has a triggering device (44) for triggering a jump-like switching rotation, and wherein
- the triggering device (44) is designed to prevent the jump-like switching rotation if an energy storage device (42) of the jump drive (40) has an insufficient charge or preload AND/OR
- the residual load disconnector switch has a load detection which monitors a current flow and/or a voltage between the feed line terminal (20) and the discharge line terminal (21) and the residual load disconnector switch (1) and, in particular, the triggering device (44) is designed to prevent a switching movement of the rotary switch body (23) if a detected electrical load between the feed line terminal (20) and the discharge line terminal (21) exceeds an admissibility limit value.

4. Residual load disconnector switch according to one of the preceding claims, wherein the residual load disconnector switch (1) comprises a position detection device (47) which detects a rotary position of the rotary switch body (23) or the presence of a closed rotary position (S1) or an open rotary position (S2).

5. Residual load disconnector switch according to one of the preceding claims, wherein the rotary switch body (23) has a one-piece or multi-piece insulating housing (60), which in particular has a first half shell (73), a second half shell (74) and an inner sleeve (72), and wherein the at least one contact blade (24, 25, 26, 27) has a central recess through which the housing (60) extends.

6. The residual load disconnector switch according to any one of the preceding claims, wherein the residual load disconnector switch (1)
- comprises a plurality of rotary switch bodies (23) which are arranged next to one another, in particular in the axial direction (A), AND/OR
- comprises two or more module switching blocks (12, 13), which in particular each comprise an insulator chamber (14) with at least one feed line terminal (20), at least or exactly one rotary switch body (23) and at least one discharge line terminal (21).

7. Residual load disconnector switch according to one of the preceding claims, wherein the residual load disconnector switch (1) is accommodated in a protective housing (81), in particular a protective container, and the protective housing (81) has an access restriction which enables manual access to the residual load disconnector switch only if a detected electrical load between the feed line terminal (20) and the discharge line terminal (21) falls below an admissibility limit value.

8. The residual load disconnector switch according to any one of the preceding claims, wherein the residual load disconnector switch
- has a remote control interface, AND/OR
- has a remote monitoring interface which is designed in particular to transmit a switching state (S1, S2) of the residual load disconnector switch (1).

9. Operating method for a residual load disconnector switch (1), the residual load disconnector switch (1) being designed according to one of the preceding claims 1 to 8 and having a rotary jump drive (40) which is designed to cause a rotary switch body (23) of the residual load disconnector switch (1) to perform a jump-like switching rotation, **characterized in that** the residual load disconnector switch (1) has a load detection which monitors a current flow and/or a voltage between the feed line terminal (20) and the discharge line terminal (21) of the residual load disconnector switch (1), and wherein the operating method comprises the following steps:
- Receiving a request to disconnect the electrical connection at the residual load disconnector switch (1);
- checking a load applied to the residual load disconnector switch between the feed line terminal (20) and the discharge line terminal (21) ;
- If it is determined that the load applied to the residual load disconnector switch between the feed line terminal (20) and the discharge line terminal (21) is less than a permissible residual load: Triggering the abrupt rotation of the rotary switching body.

10. The method of operation according to the preceding claim, wherein the residual load disconnector switch (1) comprises a motor (45) for charging the jump drive (40) or an energy storage device (42) contained therein, and wherein the motor (45) is operated only under the condition that it has been determined that the load applied to the residual load disconnector switch between the feed line terminal (20) and the discharge line terminal (21) is less than the allowable residual load.

11. The method of operation according to any one of claims 9 to 10, wherein the residual load disconnector switch (1) comprises a position detection device (47) adapted to detect the rotational position of the at least one rotary switching body (23). one rotary switch body (23), in particular the presence of a closed rotary position (S1) or an open rotary position (S2), and wherein the rotary position of the rotary switch body (23) and/or the presence of a closed rotary position (S1) or an open rotary position (S2) is sent as a status notification via a communication interface.

## Revendications

1. Disconnecteur de charge résiduelle pour la séparation d'une liaison électrique vers un conducteur d'alimentation en courant de traction (8) pour un moyen de transport (7), le disjoncteur de charge résiduelle (1) comprenant une connexion d'alimentation (20), une connexion de dérivation (21) et au moins un dispositif de commutation (22), dans lequel
- Le disconnecteur de charge résiduelle (1)
∘ à l'état fermé, fait passer un courant de traction pour le moyen de transport (7) en tant que charge principale, ET
o à l'état ouvert, il empêche la transmission d'un courant et notamment de la charge principale
- le dispositif de commutation (22) comprend un corps de commutation rotatif (23) avec au moins une lame de contact (24, 25, 26, 27), dans lequel
- l'au moins une lame de contact (24, 25, 26, 27) peut tourner autour d'un axe (A) disposé entre le raccord d'alimentation (20) et le raccord de dérivation (21) et présente des surfaces de contact (28, 29, 30, 31) côté extrémité dépassant dans la direction radiale, et où
- les surfaces de contact (28, 29, 30, 31) sont en contact avec le raccord d'alimentation (20) d'une part et avec le raccord de décharge (21) d'autre part dans une position de rotation fermée (S1) du corps de commutation rotatif (23) et sont espacées du raccord d'alimentation (20) et du raccord de décharge (21) respectivement dans une position de rotation ouverte (S2) du corps de commutation rotatif (23), etdans lequel
- le disconnecteur de charge résiduelle (1) présente un sens de rotation limité d'un côté pour l'exécution des mouvements de commutation et peut être actionné de manière unidirectionnelle et cyclique, afin de déplacer le corps de commutation rotatif (23) en particulier de manière itérative d'une position de rotation fermée (S1) à une position de rotation ouverte (S2) et à nouveau à une position de rotation fermée (S1), etc.
**caractérisé en ce que**
- le disconnecteur de charge résiduelle est prévu et conçu pour couper une liaison électrique avec le conducteur d'alimentation en courant de traction (8), et ce à l'état hors tension OU lorsqu'il existe au maximum une charge résiduelle prédéfinie, qui est présente après la coupure de la charge principale ; et **en ce que**
- le disconnecteur de charge résiduelle présente un entraînement à saut (40) qui est conçu pour amener le corps de commutation rotatif (23) à effectuer une rotation de commutation à saut.

2. Disjoncteur de charge résiduelle selon la revendication 1, dans lequel le mouvement de rotation complet entre une position de rotation fermée (S1) et une position de rotation ouverte (S2) a lieu en moins de 200 millisecondes.

3. Disjoncteur de charge résiduelle selon l'une quelconque des revendications précédentes, dans lequel le disjoncteur de charge résiduelle (1), et en particulier l'actionneur à action brusque (40), comprend un moyen de déclenchement (44) pour déclencher une rotation de commutation de type brusque, et dans lequel
- le moyen de déclenchement (44) est conçu pour empêcher la rotation de commutation brusque lorsqu'un accumulateur de force (42) de l'entraînement à action brusque (40) présente une charge ou une précontrainte insuffisante ET/OU lorsque
- le disjoncteur de charge résiduelle présente une détection de charge qui surveille un flux de courant et/ou une tension entre la connexion d'alimentation (20) et la connexion de décharge (21) et le disjoncteur de charge résiduelle (1) et en particulier le moyen de déclenchement (44) est conçu pour empêcher un mouvement de commutation du corps de commutation rotatif (23) lorsqu'une charge électrique détectée entre la connexion d'alimentation (20) et la connexion de décharge (21) dépasse une valeur limite d'admissibilité.

4. le disconnecteur de charge résiduelle selon l'une des revendications précédentes, dans lequel le disconnecteur de charge résiduelle (1) comporte un moyen de détection de position (47) qui détecte une position de rotation du corps de commutation rotatif (23) ou la présence d'une position de rotation fermée (S1) ou d'une position de rotation ouverte (S2) .

5. Disjoncteur de charge résiduelle selon l'une des revendications précédentes, dans lequel le corps de commutation rotatif (23) comporte un boîtier isolant (60) en une ou plusieurs parties, qui comporte notamment une première demi-coque (73), une deuxième demi-coque (74) et un manchon intérieur (72), et dans lequel l'au moins une lame de contact (24, 25, 26, 27) comporte un évidement central à travers lequel s'étend le boîtier (60).

6. Disjoncteur de charge résiduelle selon l'une quelconque des revendications précédentes, dans lequel le disjoncteur de charge résiduelle (1
- comprend une pluralité de corps de commutation rotatifs (23), qui sont notamment disposés côte à côte dans la direction axiale (A), ET/OU
- comprend deux ou plusieurs blocs de commutation modulaires (12, 13), qui comprennent en particulier chacun une chambre d'isolateur (14) avec au moins un raccord d'alimentation (20), au moins ou exactement un corps de commutation rotatif (23) et au moins un raccord de dérivation (21).

7. Disjoncteur de charge résiduelle selon l'une des revendications précédentes, dans lequel le disjoncteur de charge résiduelle (1) est logé dans une enceinte de protection (81), notamment un conteneur de protection, et l'enceinte de protection (81) comporte une restriction d'accès qui ne permet un accès manuel au disjoncteur de charge résiduelle que lorsqu'une charge électrique détectée entre la borne d'arrivée (20) et la borne de départ (21) est inférieure à une valeur limite d'admissibilité.

8. Disjoncteur de charge résiduelle selon l'une quelconque des revendications précédentes, dans lequel le disjoncteur de charge résiduelle comprend
- une interface de commande à distance, ET/OU
- une interface de télésurveillance, notamment configurée pour transmettre un état de commutation (S1, S2) du disjoncteur de charge résiduelle (1).

9. Procédé de fonctionnement d'un disconnecteur de charge résiduelle (1), le disconnecteur de charge résiduelle (1) étant configuré selon l'une quelconque des revendications précédentes 1 à 8 et comprenant un entraînement rotatif à saut (40) configuré pour amener un corps de commutation rotatif (23) du disconnecteur de charge résiduelle (1) à effectuer une rotation de commutation à saut, **caractérisé en ce que** le disjoncteur de charge résiduelle (1) a une détection de charge qui surveille un flux de courant et/ou une tension entre la borne d'alimentation (20) et la borne de décharge (21) du disjoncteur de charge résiduelle (1), et dans lequel le procédé de fonctionnement comprend les étapes suivantes:
- recevoir une demande de déconnexion électrique au niveau du disconnecteur de charge résiduelle (1) ;
- vérifier une charge appliquée au disjoncteur de charge résiduelle entre la borne d'alimentation (20) et la borne de décharge (21) ;
- s'il est constaté que la charge appliquée au disconnecteur de charge résiduelle entre la borne d'alimentation (20) et la borne de décharge (21) est inférieure à une charge résiduelle admissible: déclenchement du mouvement de rotation brusque du corps de commutateur rotatif.

10. Procédé de fonctionnement selon la revendication précédente, dans lequel le disjoncteur de charge résiduelle (1) comprend un moteur (45) pour charger l'actionneur à action brusque (40) ou un accumulateur d'énergie (42) contenu dans celui-ci, et dans lequel le moteur (45) est actionné uniquement à condition qu'il ait été déterminé que la charge appliquée au disjoncteur de charge résiduelle entre la borne d'alimentation (20) et la borne de décharge (21) est inférieure à la charge résiduelle autorisée.

11. Procédé de fonctionnement selon l'une quelconque des revendications 9 à 10, dans lequel le disconnecteur de charge résiduelle (1) comprend un moyen de détection de position (47) configuré pour détecter la position en rotation d'au moins un élément rotatif de charge résiduelle, en particulier la présence d'une position de rotation fermée (S1) ou d'une position de rotation ouverte (S2), et dans lequel la position de rotation du corps de commutation rotatif (23) et/ou la présence d'une position de rotation fermée (S1) ou d'une position de rotation ouverte (S2) est envoyée sous forme de notification d'état via une interface de communication.
